# EUROPÄISCHE PATENTSCHRIFT

(11) **EP 3 356 813 B1**
(45) Veröffentlichungstag und Bekanntmachung des Hinweises auf die Patenterteilung: **17.07.2019**
(21) Anmeldenummer: 16766525.6
(22) Anmeldetag: 12.09.2016
(51) Int. Cl.: G01N 29/14, G01N 29/44, G01N 29/46, G01N 15/02

(54) **VERFAHREN ZUM BESTIMMEN DER KORNGRÖSSENVERTEILUNG VON GRANULATEN IN EINEM FÖRDERSTROM UND MESSEINRICHTUNG**
METHOD FOR DETERMINING THE PARTICLE SIZE DISTRIBUTION OF GRANULAR MATERIAL IN A DELIVERY FLOW, AND MEASURING DEVICE
PROCÉDÉ PERMETTANT DE DÉTERMINER LA DISTRIBUTION GRANULOMÉTRIQUE DE GRANULÉS DANS UN FLUX DE TRANSPORT ET DISPOSITIF DE MESURE

(30) Priorität: 28.09.2015 DE 102015116376
(43) Veröffentlichungstag der Anmeldung: 08.08.2018
(73) Patentinhaber: TIPCO Tudeshki Industrial Process Control GmbH, 52064 Aachen (DE)
(72) Erfinder: TUDESHKI, Kian, 52076 Aachen (DE)
(74) Vertreter: Kohlmann, Kai
(86) Internationale Anmeldenummer: PCT/EP2016/071433
(87) Internationale Veröffentlichungsnummer: WO 2017/055063

(56) Entgegenhaltungen:
- WO-A1-2014/116675
- US-A- 5 257 530
- US-A1- 2008 282 781

## Beschreibung

Die Erfindung betrifft ein Verfahren zum kontinuierlichen Bestimmen der Korngrößenverteilung von Granulaten bestehend aus Feststoffpartikeln mit unterschiedlichen Korngrößen, die in einer Förderrichtung in einen Förderstrom transportiert werden und dabei mit mindestens einem als Wellenleiter eingerichteten Anprallkörper kollidieren und akustische Signale erzeugen, die sich in jedem Anprallkörper als Körperschallwellen ausbreiten. Außerdem betrifft die Erfindung eine Messeinrichtung zur Durchführung des Verfahrens.

Ein wesentliches Merkmal von Granulaten ist deren Korngrößenverteilung, die in allen Zweigen der Industrie als ein messbarer Parameter zur Prozessüberwachung, Qualitätskontrolle, Qualitätssteuerung, Maschinen- und Anlagenüberwachung und Maschinen- und Anlagensteuerung herangezogen wird.

Granulate werden bei der Umlagerung, Produktion oder Verwendung mit unterschiedlichen Transportsystemen transportiert, wobei der Transport in der Regel als Förderstrom hydraulisch, z.B. als Feststoff-Wasser-Gemisch, pneumatisch, z.B. als Feststoff-Luft-Gemisch, mittels Bandanlagen oder teilweise im freien Fall erfolgt. Die Entwicklung eines Verfahrens und einer Vorrichtung, die in allen Förderströmen für ein breites Kornspektrum von einigen Mikrometern bis zu einigen Dezimetern eine Korngrößenanalyse in Echtzeit erlaubt, ist für eine Vielzahl von Industriezweigen von besonderer Bedeutung.

Eine Vielzahl von Untersuchungen und Entwicklungsbestrebungen konzentrieren sich auf die Nutzung der Akustik zur Analyse von Granulaten, hauptsächlich in Suspensionsform während des hydraulischen Transports.

Unterschieden wird zwischen aktiven und passiven akustischen Verfahren:
Ein aktives Verfahren liegt vor, wenn von einem Sender ein aktives akustisches Signal gesendet und von einem Empfänger empfangen wird. Dabei wird die, infolge der Kollision zwischen der akustischen Welle und den Feststoffpartikeln des Granulats entstehende Dämpfung und/oder die Reflektion desselben für die Signalverarbeitung genutzt. Aktive Verfahren sind Beispiele in der EP 0801305 A, der WO 03/102550A1 und der US 6,481,268 B1 beschrieben.

Die aktiven akustischen Verfahren liefern nur für die Messung von Suspensionen mit einer sehr geringen Feststoffkonzentration und für ein sehr eng begrenztes und relativ feines Korngrößenspektrum sinnvolle Ergebnisse.

Ein passives akustisches Verfahren liegt vor, wenn akustische Signale für die Signalverarbeitung genutzt werden, die während des Transports des Granulats durch eine Kollision von Feststoffpartikeln des Granulats mit einer Vorrichtung, wie einer Sonde (Anprallkörper), oder einem Teil des Transportsystems, wie beispielsweise einer Rohrwandung, entstehen.

Passiven Verfahren sind Beispiele in der US 5,257,530 B und der WO 2014 /116675 A1 beschrieben:
Die US 5,257,530 B offenbart eine metallische Sonde, die quer zur Förderrichtung einer Suspension in einer Leitung angeordnet ist, so dass die Feststoffpartikel mit der Sonde kollidieren. An der Sonde ist außerhalb der Leitung ein Beschleunigungsaufnehmer angebracht, der die akustischen Signale aufnimmt. Die verstärkten akustischen Signale werden zu einer Signalverarbeitungseinheit übertragen. Im Rahmen der Signalverarbeitung wird nach einer FFT-Analyse (Fast Fourier Transformation) aus der Signalenergie und Signalintensität auf die Konzentration der Feststoffpartikel in der Suspension geschlossen. In erster Linie dient das Verfahren zur Bestimmung der Konzentration und Masse von Sand in einem Öl- oder Gasstrom.

Die WO 2014/116675 A1 offenbart einen als Wellenleiter eingerichteten Anprallkörper, der quer zur Förderrichtung einer Suspension in einer Leitung angeordnet ist, so dass die Feststoffpartikel mit dem Anprallkörper kollidieren. An der Sonde ist außerhalb der Leitung ein akustischer Wandler angebracht, der die akustischen Signale aufnimmt. Die akustischen Signale werden zu einer Signalverarbeitungseinheit übertragen. Im Rahmen der Signalverarbeitung soll auf die Korngrößenverteilung der Feststoffpartikel in der Suspension geschlossen werden. Die akustischen Signale werden mit einer Abtastfrequenz von beispielsweise 250 Hz abgetastet. Für jedes abgetastete Signal wird im Wege einer DFFT (Discrete Fast Fourier Transformation) das Frequenzspektrum transformiert und daraus die PDS (Power Density Spectrum) erzeugt, d.h. die Schalleistungsdichte. Eine Änderung der Steigung der Signalintensität im Frequenzbereich 100 kHz bis 1 MHz sowie die Änderung der Signalintensität für eine bevorzugte Frequenz im Frequenzbereich größer als 20 kHz dienen zur Bestimmung der Korngröße der Feststoffpartikel in der Suspension.

Eine Überprüfung der Messergenbisse hat ergeben, dass die bekannten passiven akustischen Verfahren keine repräsentativen Messergebnisse bei der Messung der Korngrößenverteilung von granularen Materialien in Echtzeit liefern.

Ferner ist aus der US 2008/282781 A1 eine Vorrichtung und ein Verfahren zur Überwachung von Formationssand in leitungsgebundenen Öl- und Gasförderströmen bekannt. Der Sand ruft in den Leitungen, insbesondere deren Krümmungen Erosionsverschleiß hervor. Der Erosionsverschleiß wird üblicherweise mit einem elektrischen Widerstandssensor erfasst. Um außerdem die Menge des Formationssandes in dem Förderstrom zu messen und mit dem Erosionsverschleiß zu korrelieren. Um neben dem Erosionsverschleiß die Partikelmenge und deren Einfluss auf den Erosionsverschleiß erfassen zu können wird in D1 eine Sonde vorgeschlagen, die ein von einem Gehäuse entkoppeltes Detektorelement auf weist, das eine Anprallfläche, einen an die Anprallfläche gekoppelten akustischen Sensor und den elektrischen Widerstandssensor zur Erfassung des Erosionsverschleißes aufweist. Der Akustiksensor dient zur Erfassung der Partikelmenge, in dem die Anzahl der Kollisionen der Partikel an der Anprallfläche gezählt wird. Die Sonde kann darüber hinaus Mittel zur Erfassung der Strömungsenergie aufweisen. Die Strömungsenergie des Förderstroms wird mittels eines Differenzdruckwandlers erfasst. Um die Anzahl der Partikel in einem bestimmten Größenbereich zu ermitteln, die auf die Anprallfläche auftreffen, müssen die akustischen Energiesignale der Partikel mit der aus der Strömungsenergie abgeleiteten Fließgeschwindigkeit unter der Annahme konstanter Dichte korreliert werden. Die Korrelation zwischen den akustischen Energiesignalen der auftreffenden Partikel sowie der qualitativen Änderungen der Fließgeschwindigkeit dient dem Zweck, die Anzahl der Partikel in dem bestimmten Größenbereich mit dem Erosionsverschleiß bei einem gegebenen Geschwindigkeitsprofil des Förderstroms zu korrelieren.

Der Erfindung liegt daher die Aufgabe zugrunde, ein passives akustisches Verfahren vorzuschlagen, mit dem repräsentative Messergebnisse bei der Messung der Korngrößenverteilung von granularen Materialien in Echtzeit erzielt werden. Außerdem soll eine Messeinrichtung zur Durchführung des Verfahrens vorgeschlagen werden.

Die Lösung dieser Aufgabe basiert auf der Nutzung der Erkenntnis, dass das akustische Signal hinsichtlich seiner Charakteristik von der Korngrößenverteilung und der Strömungsenergie des Förderstroms abhängt. Die Strömungsenergie wird durch die Geschwindigkeit und Konzentration bzw. Schüttdichte der Feststoffpartikel des Granulats bestimmt. Um in Echtzeit zuverlässige Messergebnisse zur Korngrößenverteilung zu erhalten, wird erfindungsgemäß die Strömungsenergie des Förderstroms mit Hilfe mindestens eines Kraftaufnehmers erfasst und die Signalverarbeitung der elektrischen Signale jedes Schwingungsaufnehmers unter Berücksichtigung der elektrischen Signale jedes Kraftaufnehmers durchgeführt.

Das Verfahren zum kontinuierlichen Bestimmen der Korngrößenverteilung setzt eine vorherige Kalibrierung voraus:
In einem ersten Schritt wird eine Normierfunktion erstellt, in dem eine Korrelation zwischen dem elektrischen Signal jedes Schwingungsaufnehmers und den mit dem Kraftaufnehmer erfassten Signalen der Strömungsenergie des Förderstroms bei unterschiedlichen, bekannten Strömungsenergien ermittelt wird. Hierzu kann beispielsweise die Geschwindigkeit des Förderstroms bei gleichbleibender Konzentration und Korngrößenverteilung verändert werden.

In einem zweiten Schritt wird unter Berücksichtigung der so erhaltenen Normierfunktion eine Kalibrierfunktion für die Energienormierung der Signalintensität erstellt, in dem eine Korrelation zwischen den mit der Normierfunktion verarbeiteten elektrischen Signalen jedes Schwingungsaufnehmers und der mit einer herkömmlichen Methode zur Bestimmung der Korngrößenverteilung bestimmten Korngrößenverteilung des Granulats ermittelt wird. Die Korngrößenverteilung kann beispielsweise durch eine Siebklassierung bestimmt werden. Die Erfassung der akustischen Signale und die herkömmliche Bestimmung der Korngrößenverteilung beziehen sich auf ein im wesentlichen übereinstimmendes Kollektiv von Feststoffpartikeln aus dem Förderstrom, d.h. die Probe für die Siebklassierung wird während der Erfassung der akustischen Signale für die Kalibrierung in unmittelbarer Nähe zu dem Schwingungsaufnehmer gezogen.

Der sich an die Kalibrierung anschließende Regelbetrieb der Signalverarbeitung zum Bestimmen der Korngrößenverteilung umfasst sodann die folgenden Schritte:
- Normieren der von dem Schwingungsaufnehmer erfassten elektrischen Signale mit der Normierfunktion in Abhängigkeit von den erfassten elektrischen Signalen des Kraftaufnehmers, um die Abhängigkeit der erfassten elektrischen Signale des Schwingungsaufnehmers von der Strömungsenergie zu eliminieren.
- Ermitteln der Korngrößenverteilung durch Anwenden der Kalibrierfunktion auf die normierten elektrischen Signale.

Mit dem erfindungsgemäßen Verfahren ist es möglich, eine Korngrößenanalyse von Granulaten in Echtzeit mit einem sehr breiten Kornspektrum von einigen Mikrometern bis einigen Dezimetern in jeglicher Art von Förderströmen, basierend auf einem passiven akustischen Verfahren durchzuführen.

Sofern die akustischen Signale von dem Anprallkörper, auch als Sonde bezeichnet, direkt auf den Schwingungsaufnehmer übertragen werden, kommen insbesondere Beschleunigungssensoren für das Erfassen der akustischen Signale und das Umformen in elektrische Signale in Betracht. Der Beschleunigungssensor wird an dem Anprallkörper vorzugsweise in Förderrichtung hinter dem Anprallkörper derart befestigt, dass keine Feststoffpartikel aus dem Förderstrom unmittelbar mit dem Beschleunigungsaufnehmer in Kontakt gelangen. Werden die akustischen Signale durch die Luft auf den Schwingungsaufnehmer übertragen, kommt als Schwingungsaufnehmer insbesondere ein akustischer Schallwandler in Betracht.

Das Erfassen der Strömungsenergie erfolgt vorzugsweise mit Hilfe mindestens eines Kraftaufnehmers, der ortsfest in Bezug zu dem Förderstrom angeordnet ist und durch an einen auf den elastischen Verformungskörper einwirkenden Förderstrom verursachte Kräfte erfasst, vorzugsweise durch eine Widerstandsmessung mittels mindestens eines Dehnungsmessstreifens (DMS). Der Dehnungsmessstreifen ist an dem Verformungskörper angebracht, insbesondere aufgeklebt. Der Förderstrom verformt den Verformungskörper elastisch, wodurch sich der elektrische Widerstand des Dehnungsmessstreifens ändert.

Das Transportieren der Feststoffpartikel in einer festgelegten Förderrichtung in einem Förderstrom erfolgt vorzugsweise mit Hilfe eines Transportsystems. Bei dem Transportsystem handelt es sich insbesondere um einen Bandförderer oder einen Strömungsförderer, der die Feststoffpartikel entweder pneumatisch, d.h. als Feststoffpartikel-Gas-Gemisch oder hydraulisch als Feststoffpartikel-Flüssigkeits-Gemisch transportiert. Außerdem können die Feststoffpartikel in einer Förderrichtung in einem Förderstrom im freien Fall transportiert werden.

Die akustischen Signale werden vorzugsweise mit mindestens einem piezoelektrischen Beschleunigungssensor erfasst. Als neutrale Achse des Beschleunigungssensors wird diejenige Achse bezeichnet, in der die erzeugte Ladungsmenge direkt proportional zu der Krafteinwirkung auf das piezoelektrische Element ist.

In einer vorteilhaften Ausgestaltung der Erfindung wird der Beschleunigungssensor derart angeordnet, dass die neutrale bzw. piezoelektrische Achse mit der Förderrichtung des Granulats im Augenblick des Anpralls an dem Anprallkörper übereinstimmt. Die im Stand der Technik übliche orthogonale Anordnung der neutralen Achse zur Förderrichtung hat zur Folge, dass sich die Körperschallwellen in dem Anprallkörper in erster Linie als transversale Wellen in Richtung der neutralen Achse des Sensors ausbreiten. Die geringe Geschwindigkeit der transversalen Wellen und deren orthogonale Ausbreitungsrichtung führen im Stand der Technik zu Signalverzerrungen und Fehlinterpretationen der Signale.

Vorzugsweise wird der Beschleunigungssensor derart an dem Anprallkörper befestigt, dass sich die Körperschallwellen in dem Anprallkörper in erster Linie als Longitudinalwellen in Richtung der neutralen Achse des Beschleunigungssensors ausbreiten. Hierdurch erreichen die Körperschallwellen auf dem kürzesten Wege und ohne Verzerrungen den Beschleunigungssensor.

In weiterer Ausgestaltung des erfindungsgemäßen Verfahrens wird jeder Anprallkörper schwingungsisoliert in dem Förderstrom gehalten. Die Schwingungsisolation zwischen dem Anprallkörper und der Halterung reduziert den Einfluss von Fremdschwingungen auf den Anprallkörper und den daran befestigtem Schwingungsaufnehmer, insbesondere werden Veränderungen der Signalintensität und Frequenzverschiebungen weitgehend vermieden.

Zur weiteren Verbesserung der Signalqualität und Reproduzierbarkeit der Erfassung der akustischen Signale wird der Beschleunigungssensor mittels einer Schraubverbindung lösbar mit dem Anprallkörper verbunden. Hierdurch wird ein dauerhaft bestmöglicher Kontakt zu dem Anprallkörper gewährleistet. Eine Veränderung des Kontaktes zwischen dem Beschleunigungssensor und dem Anprallkörper in Folge dynamischer Schwingungen, von Witterungseinflüssen und Alterung sowie eine damit einhergehende Beeinträchtigung der Signaleigenschaften wird vermieden. Zusätzlich zu der Verschraubung kann der Sensor mit dem Anprallkörper mechanisch arretiert werden.

Wie bereits eingangs erläutert umfasst der Kraftaufnehmer zum Erfassen der Strömungsenergie des Förderstroms einen Verformungskörper sowie mindestens einen auf dem Verformungskörper angeordneten Dehnungsmessstreifen. Eine konstruktiv vorteilhafte Integration des Kraftaufnehmers in die Baugruppe zum Erfassung der akustischen Signale mit Hilfe mindestens eines Schwingungsaufnehmers wird dadurch erreicht, dass die mit dem vorzugsweise stabförmigen Anprallkörper kollidierenden Feststoffpartikel den Anprallkörper elastisch verformen, wodurch sich der elektrische Widerstand mindestens eines auf dem Anprallkörper angebrachten Dehnungsmessstreifen des Kraftaufnehmers ändert. Der Anprallkörper bildet in dieser Ausführungsform der Erfindung zugleich den Verformungskörper des Kraftaufnehmers.

Die Integration des Kraftaufnehmers in die Baugruppe zum Erfassen der akustischen Signale bewirkt außerdem, dass das Erfassen der akustischen Signale und der Strömungsenergie im wesentlichen zeitgleich und in Bezug auf ein im Wesentlichen übereinstimmendes Kollektiv von Feststoffpartikeln erfolgt, sodass Verfälschungen der Ergebnisse der Signalverarbeitung durch einen zu großen Abstand zwischen dem Kraftaufnehmer und dem Schwingungsaufnehmer vermieden werden.

Eine weitere Möglichkeit zur Anordnung des Kraftaufnehmers in unmittelbarer Nähe zu dem Schwingungsaufnehmer besteht darin, dass die mit einer Halterung für den Anprallkörper kollidierenden Feststoffpartikel die Halterung elastisch verformen, wodurch sich der elektrische Widerstand mindestens eines auf die Halterung angebrachten Dehnungsmessstreifen des Kraftaufnehmers ändert. Bei dieser Ausgestaltung der Erfindung bildet die Halterung für den Anprallkörper zugleich den Verformungskörper des Kraftaufnehmers.

Eine weitere Möglichkeit zur Integration von Schwingungs- und Kraftaufnehmer in eine Baugruppe besteht darin, dass das Erfassen der Strömungsenergie mit Hilfe mindestens eines an dem Anprallkörper angeordneten Kraftaufnehmers erfolgt. Vorzugsweise ist der Kraftaufnehmer, beispielsweise eine Kraftmessdose, zwischen dem Anprallkörper und dessen Halterung angeordnet.

Sofern der Schwingungsaufnehmer und der Kraftaufnehmer in Förderrichtung versetzt zueinander angeordnet sind, ist ein möglichst geringer Abstand zwischen Schwingungsaufnehmer und Kraftaufnehmer zu wählen. Zusätzlich oder alternativ kann die zu erwartende durchschnittliche Geschwindigkeit des Förderstroms und der Abstand zwischen dem Kraftaufnehmer und dem Schwingungsaufnehmer bei der Signalverarbeitung der elektrischen Signale berücksichtigt werden.

Ein vorteilhaftes Verfahren zur Kalibrierung und Signalverarbeitung, das auf einer Signalklassierung beruht, ergibt sich aus den Merkmalen der Ansprüche 11 und 12. Das Signalverarbeitungsverfahren mit den Merkmalen des Anspruchs 12 wird insbesondere bei Granulaten mit einer relativ geringen zu erwartenden Schwankung der Korngrößenverteilung angewandt. Abweichend zum Stand der Technik benötigt das Signalverarbeitungsverfahren keine Transformation der Signale aus dem Bereich der Fourier-Analysis.

Sofern die zu erwartenden Schwankungen der Korngrößenverteilung des Granulats einer größeren Variation unterliegen, wird ein Verfahren zur Kalibrierung und Signalverarbeitung mit den Merkmalen der Ansprüche 13 und 14 angewandt. Vor Beginn des Regelbetriebs zur Signalverarbeitung der elektrischen Signale zum Bestimmen der Korngrößenverteilung werden gemäß Anspruch 13 im Rahmen der Kalibrierung für 1-N Proben aus dem Förderstrom mit unterschiedlichen Korngrößenverteilungen jeweils eine Kalibrierfunktion 1 -N im Wege der Signalklassierung sowie eine Zuordnungsfunktion erstellt.

Im Regelbetrieb der Signalverarbeitung nach Anspruch 14, die ebenfalls auf einer Kombination der Signalklassierung und dem statistischen Verfahren der Hauptkomponentenanalyse beruht, lässt sich die für das Granulat mit stark schwankender Korngrößenverteilung passende Kalibrierfunktion auswählen und mit deren Hilfe die Korngrößenverteilung ermitteln.

Eine vorteilhafte Messeinrichtung für die Durchführung des Verfahrens zum kontinuierlichen Bestimmen der Korngrößenverteilung ergibt sich aus den Merkmalen des unabhängigen Anspruchs 15. Die Ansprüche 16 - 24 betreffen vorteilhafte Weiterbildungen der Messeinrichtung.

Nachfolgend wird das erfindungsgemäße Verfahren sowie die Messeinrichtung anhand der nachfolgenden Figuren näher erläutert. Es zeigen
- **Figur 1**: Ein erstes Ausführungsbeispiel einer an einem Strömungsförderer angeordneten Messeinrichtung zur Durchführung des erfindungsgemäßen Verfahrens.
- **Figur 2**: Ein zweites Ausführungsbeispiel einer an einem Strömungsförderer angeordneten Messeinrichtung zur Durchführung des erfindungsgemäßen Verfahrens.
- **Figur 3**: Ein erstes Ausführungsbeispiel einer an einem Bandförderer angeordneten Messeinrichtung zur Durchführung des erfindungsgemäßen Verfahrens.
- **Figur 4**: Ein zweites Ausführungsbeispiel einer Messeinrichtung zur Durchführung des erfindungsgemäßen Verfahrens an einem in Figur 4 nicht dargestellten Bandförderer.
- **Figur 5**: Ein drittes Ausführungsbeispiel einer Messeinrichtung zur Durchführung des erfindungsgemäßen Verfahrens an einem in Figur 5 nicht dargestellten Bandförderer.
- **Figur 6**: Eine Abwandlung des dritten Ausführungsbeispiels einer Messeinrichtung zur Durchführung des erfindungsgemäßen Verfahrens an einem in Figur 6 nicht dargestellten Bandförderer.
- **Figur 7**: Ein viertes Ausführungsbeispiel einer Messeinrichtung zur Durchführung des erfindungsgemäßen Verfahrens an einem in Figur 7 nicht dargestellten Bandförderer..
- **Figur 8**: Eine Abwandlung des vierten Ausführungsbeispiels einer Messeinrichtung zur Durchführung des erfindungsgemäßen Verfahrens an einem in Figur 8 nicht dargestellten Bandförderer.
- **Figur 9**: Ein fünftes Ausführungsbeispiel einer an einem Bandförderer angeordneten Messeinrichtung zur Durchführung des erfindungsgemäßen Verfahrens.
- **Figur 10**: Ein Flussdiagramm zur Veranschaulichung der Erstellung einer Normierfunktion im Rahmen der Kalibrierung der Messeinrichtung.
- **Figur 11**: Ein Flussdiagramm zur Veranschaulichung der Erstellung einer oder mehrerer Kalibrierfunktionen im Rahmen der Kalibrierung der Messeinrichtung, abhängig von den zu erwartenden Schwankungen der Korngrößenverteilung.
- **Figuren 11a-i**: Darstellungen zur Veranschaulichung der einzelnen Schritte der Erstellung einer Kalibrierfunktion bei einer relativ geringen zu erwartenden Schwankung der Korngrößenverteilung des Granulats sowie des Regelbetriebs.
- **Figur 12**: Ein Flussdiagramm zur Veranschaulichung der Erstellung einer Zuordnungsfunktion im Rahmen der Kalibrierung einer Messeinrichtung für eine Korngrößenanalyse eines Granulats mit starken zu erwartenden Schwankungen der Korngrößenverteilung.
- **Figur 13**: Ein Flussdiagramm zur Veranschaulichung des Regelbetriebs der Korngrößenanalyse.

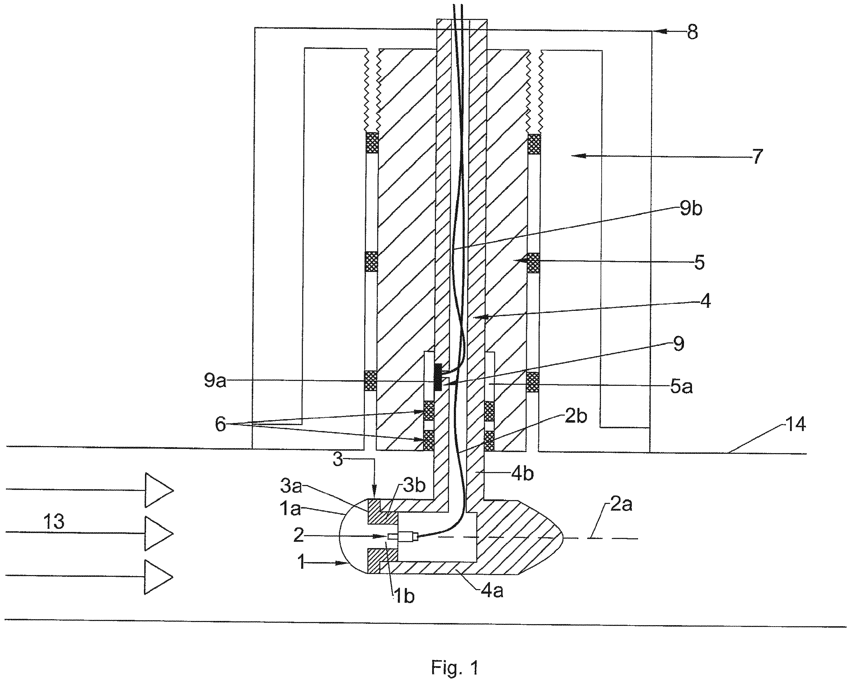

Figur 1 zeigt eine Messeinrichtung zum Durchführen eines Verfahrens zum kontinuierlichen Bestimmen der Korngrößenverteilung von Granulaten in einem Strömungsförderer. Die Messeinrichtung besteht im Wesentlichen aus einem Anprallkörper (1) aus einem metallischen, verschleißfesten Werkstoff, der zur Erzeugung akustischer Signale durch Anprall von Feststoffpartikeln eines Granulats eingerichtet ist, die sich als Körperschallwellen in dem Anprallkörper (1) ausbreiten. Des Weiteren weist die Messeinrichtung eine Halterung (4) zum Halten des Anprallkörpers (1) in einem Förderstrom auf, in dem Feststoffpartikel in einer Förderrichtung (13) mit einem Strömungsförderer hydraulisch oder pneumatisch durch eine Rohrleitung (14) transportiert werden.

Der Anprallkörper (1) weist ein Kollisionsteil (1a) in Form eines Kugelsegmentes und ein Halteteil (1b) in Form eines geraden Kreiszylinders auf, wobei sich der gerade Kreiszylinder senkreckt von der Grundfläche des Kreissegmentes in Verlängerung von dessen Höhe erstreckt. Die sphärische Oberfläche des Kollisionsteils (1a) ist entgegen der Strömungsrichtung (13) orientiert, sodass die Feststoffpartikel ausschließlich mit der sphärischen Oberfläche des Kollisionsteils (1a) kollidieren. Der als Beschleunigungssensor ausgeführte Schwingungsaufnehmer (2) ist geschützt an der Stirnseite des Halteteils (1b) verschraubt. Das als Kugelsegment ausgeführte Kollisionsteils (1a) verbessert die Signalqualität, insbesondere das Signal-Rauschverhältnis des Schwingungsaufnehmers (2). Außerdem ist das als Kugelsegment ausgeführte Kollisionsteil (1a) des Anprallkörpers verschleißarm und strömungstechnisch günstig geformt.

Zwischen der Halterung (4) und dem Anprallkörper (1) ist eine Schwingungsisolierung (3) aus elastischem Material angeordnet. Die Schwingungsisolierung (3) weist einen kreisringförmigen Abschnitt (3a) und einen hohlzylindrischen Abschnitt (3b) auf, wobei der kreisringförmige Abschnitt (3a) flächendeckend auf der Grundfläche des Kugelsegmentes und der hohlzylindrische Abschnitt (3b) an dem Außenmantel des kreiszylindrischen Halteteils (1b) anliegen.

Die Halterung (4) weist einen unteren rohrförmigen, sich in Strömungsrichtung verjüngenden Abschnitt (4a) auf, der das von der Schwingungsisolierung (3) umgebene zylindrische Halteteil (1b) des Anprallkörpers (1) bündig aufnimmt. Die Halterung (4) weist ferner einen zu dem rohrförmigen Abschnitt (4a) senkrecht verlaufenden, rohrförmigen Abschnitts (4b) auf, der von einer Führungshülse (5) in der Höhe verstellbar aufgenommen wird.

In einem zwischen dem rohrförmigen Abschnitt (4b) und der Führungshülse (5) gebildeten Ringraum (5a) sind fußseitig Dichtringe (6) zwischen dem Außenmantel des rohrförmigen Abschnitts (4b) und dem Innenmantel des Ringraums (5a) angeordnet, die einen Austritt des Strömungsmediums aus der Rohrleitung (14) verhindern. Die Führungshülse (5) wird von einem an der Rohrleitung befestigten flanschartigen Halteteil (7) aufgenommen, auf das zum Schutz der Messeinrichtung eine Kappe (8) aufgesetzt ist.

Auf die Mantelfläche des von dem Ringraum (5a) umgebenen rohrförmigen Abschnitts (4b) ist ein Dehnungsmessstreifen (DMS) (9a) aufgeklebt, dessen elektrischer Widerstand sich bei einer Verformung desrohrförmigen Abschnitts ändert. Die elastischen Dichtringe (6) schützen den DMS (9a) vor einer Beschädigung durch den pneumatischen oder hydraulischen Förderstrom der Feststoffpartikel und lassen zugleich eine elastische Verformung des rohrförmigen Abschnitts (4b) in dem Ringraum zu. Damit bildet der rohrförmige Abschnitt (4b) der Halterung (4) zugleich den Verformungskörper eines Kraftaufnehmers (9) umfassend den Verformungskörper und den Dehnungsmessstreifen (9a).

Ein wesentlicher Vorteil der in Figur 1 dargestellten Messeinrichtung besteht darin, dass die neutrale Achse (2a) des als Beschleunigungssensor ausgeführten Schwingungsaufnehmers (2) mit der Förderrichtung (13) des Granulats in der Rohrleitung übereinstimmt. Die durch den Anprall der Feststoffpartikel an dem Kollisionsteil (1a) hervorgerufenen Körperschallwellen breiten sich auf dem kürzesten Weg und ohne Verzerrungen nahezu ausschließlich als Longitudinalwellen in Richtung des Beschleunigungssensors aus.

Der Schwingungsaufnehmer (2) ist elektrisch gegenüber dem Anprallkörper isoliert. Die elektrische Isolierung verhindert Signalverzerrungen und damit Fehlinterpretationen der Signale, die bereits bei einem sehr schwachen Stromfluss hervorgerufen durch den Förderstrom und/oder durch Bestandteile der Messeinrichtung auftreten können.

Die von dem Schwingungsaufnehmer (2) in elektrische Signale umgeformten akustischen Signale werden mittels einer Signalleitung (2b) durch das Innere der rohrförmigen Abschnitte (4a,b) zu einer in Figur 1 nicht dargestellten Signalverarbeitungseinheit, beispielweise einem Personal Computer, geführt. In gleicher Weise werden die von dem Kraftaufnehmer (9) erfassten elektrischen Signale über eine Signalleitung (9b) durch das Innere der rohrförmigen Abschnitte (4a,b) zu der Signalverarbeitungseinheit übertragen.

In der Signalverarbeitungseinheit werden die elektrischen Signale des Schwingungsaufnehmers (2) unter Berücksichtigung der elektrischen Signale jedes Kraftaufnehmers (9) verarbeitet, um die Korngrößenverteilung aus den akustischen Signalen unter Berücksichtigung der Strömungsenergie zu ermittelten.

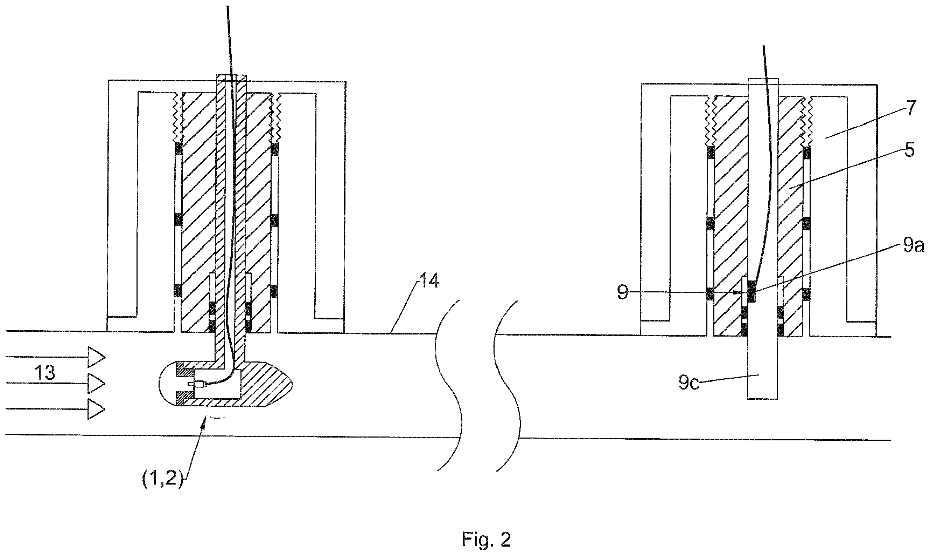

Die Messeinrichtung nach Figur 2 unterscheidet sich von der Messeinrichtung nach Figur 1 im Wesentlichen dadurch, dass der Kraftaufnehmer (9) räumlich getrennt von der Messbaugruppe (1,2) umfassend den Anprallkörper (1) und den Schwingungsaufnehmer (2) in der Rohrleitung (14) des Strömungsförderers angeordnet ist. Der Kraftaufnehmer (9) ist relativ nahe an der Messbaugruppe (1,2) angeordnet, damit das Erfassen der akustischen Signale und der Strömungsenergie in Bezug auf ein im Wesentlichen übereinstimmendes Kollektiv der Feststoffpartikel des Förderstroms erfolgt. Der Kraftaufnehmer (9) weist einen stabförmigen, elastisch verformbaren Verformungskörper (9c) auf, wobei auf der Oberfläche des Stabes ein Dehnungsmessstreifen (9a) derart angebracht ist, dass sich dessen elektrischer Widerstand bei einer elastischen Verformung des Verformungskörpers (9c) in Folge des Anpralls der Feststoffpartikel des Förderstroms ändert. Der Verformungskörper (9c) wird in gleicher Weise wie der senkrechte rohrförmige Abschnitt (4b) der Halterung (4) von einer Führungshülse (5) aufgenommen, die von einem flanschartigen Halteteil (7) aufgenommen wird. Der DMS (9a) ist ebenfalls an dem sich in den Ringraum (5a) erstreckenden, durch die Dichtringe (6) gegenüber der Rohrleitung (14) abgeschirmten Abschnitt des Vorformungskörpers (9c) angeordnet.

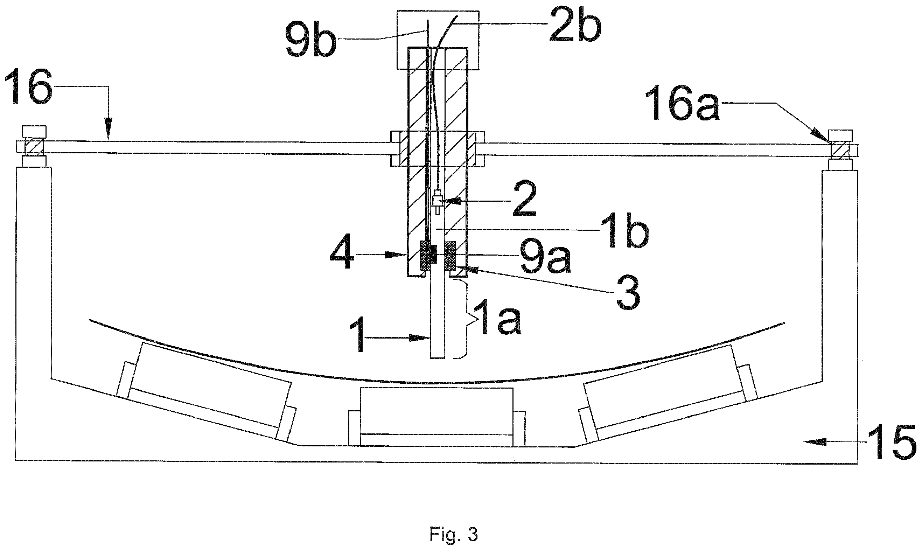

Die in Figur 3 dargestellte Messeinrichtung ist zum kontinuierlichen Bestimmen der Korngrößenverteilung von Granulaten bestimmt, die auf einem Bandförderer (15) in einer senkrecht zur Bildebene verlaufenden Förderrichtung transportiert werden. Der Anprallkörper (1) ist als Stab ausgebildet ist, wobei ein erster Teil des Stabes als Kollisionsteil (1a) und ein zweiter Teil des Stabes als Halteteil (1b) ausgebildet ist. Das Kollisionsteil (1) ragt in das als lose Schüttung auf dem Bandförderer vorliegende Granulat hinein und kollidiert fortlaufend mit den Feststoffpartikeln in dem Förderstrom. Das Halteteil (1b) wird von einer hülsenförmigen Halterung (4) aufgenommen.

Die aus einem elastischen Material bestehende Schwingungsisolierung (3) befindet sich zwischen dem beweglichen Kollisionsteil (1b) und dem Inneren der Halterung (4). Der Schwingungsaufnehmer (2) ist stirnseitig an dem Halteteil (1b) verschraubt, als Beschleunigungssensor ausgeführt und ertreckt sich von dem Anprallkörper (1) in das Innere der hülsenförmigen Halterung (4).

Der Dehnmessstreifen (9a) des Kraftaufnehmers (9) ist an dem beweglichen Kollisionsteil (1a) des Anprallkörpers (1) geschützt innerhalb der hülsenförmigen Halterung befestigt. Das Kollisionsteil (1a) des Anprallkörpers (1) bildet damit zugleich den elastisch verformbaren Verformungskörper des Kraftaufnehmers (9).

Die Halterung (4) ist schwingungsentkoppelt an einer brückenartigen Rahmenkonstruktion (16) höhenverstellbar befestigt, die über Schwingungsdämpfer (16a) mit dem Rahmen des Bandförderers (15) verbunden ist.

Beim Betrieb des Bandförderers (15) kollidieren die Feststoffpartikel fortlaufend mit dem Kollisionsteil (1a) des Anprallkörpers (1). Die dabei erzeugten akustischen Signale breiten sich in erster Linie als Transversalwellen in Richtung des Schwingungsaufnehmers (2) aus, der die akustischen Signale erfasst und in elektrische Signale umformt. Zugleich wird die Strömungsenergie des Förderstroms mit Hilfe des Dehnmessstreifens (9a) in Folge einer Verformung des Kollisionsteils (1a) und einer damit einhergehenden Widerstandsänderung des Dehnmessstreifens (9a) erfasst und in elektrische Signale umgeformt. Die elektrischen Signale werden über die Signalleitungen (2b, 9b) zu der nicht dargestellten Signalverarbeitungseinheit weitergeleitet und verarbeitet.

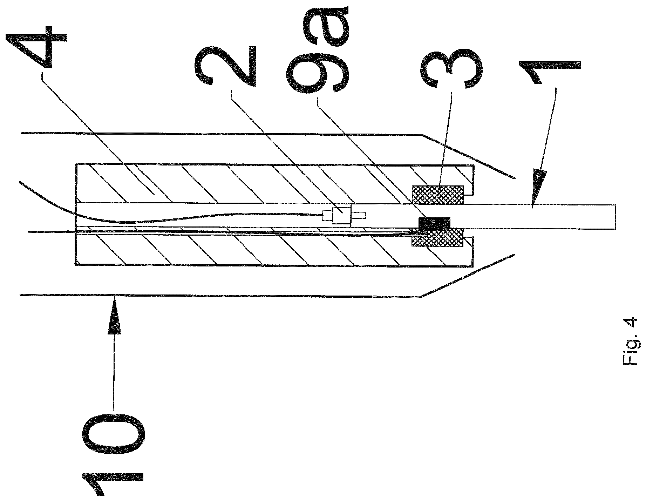

Die in Figur 4 dargestellte Messeinrichtung entspricht der Messeinrichtung nach Figur 3, sodass auf die dortigen Ausführungen Bezug genommen wird. Unterschiede ergeben sich insoweit, als eine Hülse (10) die Halterung (4) und teilweise das Kollisionsteil (1a) des stabförmigen Anprallkörpers (1) umgibt, wobei die Hülse (10) von der Halterung (4) und dem Anprallkörper (1) schwingungsentkoppelt an der Rahmenkonstruktion (16) gehaltert ist. Die Hülse (10) bewirkt, dass der Abschnitt des Kollisionsteils (1a), der mit den Feststoffpartikeln in dem Förderstorm kollidiert, unabhängig von der Höhe der Beladung des Bandförderers (15) im Bereich der Messeinrichtung konstant gehalten wird. Schwankungen der Messwerte durch eine schwankende Beladungshöhe können damit weitgehend vermieden werden.

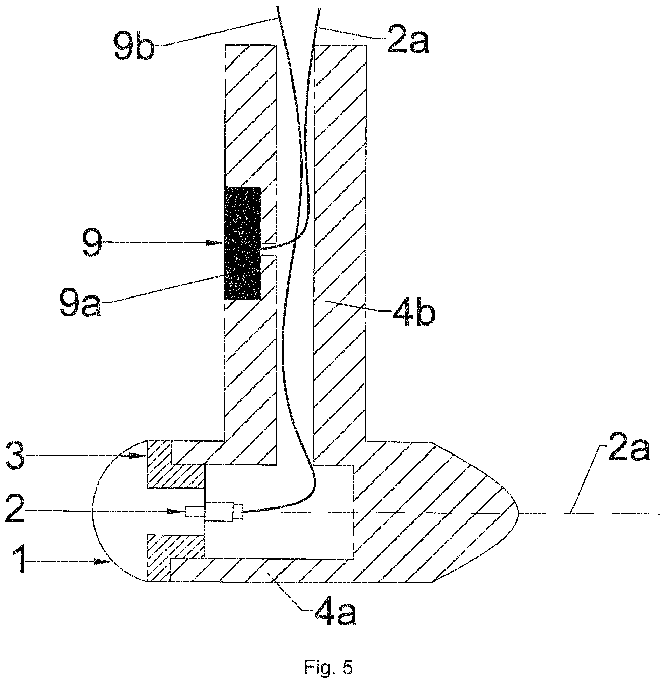

Figur 5 zeigt eine Messeinrichtung entsprechend Figur 1, wobei der rohrförmige Abschnitt (4b) der Halterung (4) schwingungsentkoppelt von der Rahmenkonstruktion (16) des Bandförderers (15) aufgenommen wird. Der Vorteil der in Figur 5 dargestellten Messeinrichtung besteht darin, dass die neutrale Achse (2a) des als Beschleunigungsaufnehmer ausgestalteten Schwingungsaufnehmers (2) mit der Förderrichtung (13) der Feststoffpartikel auf dem Bandförderer (15) übereinstimmt.

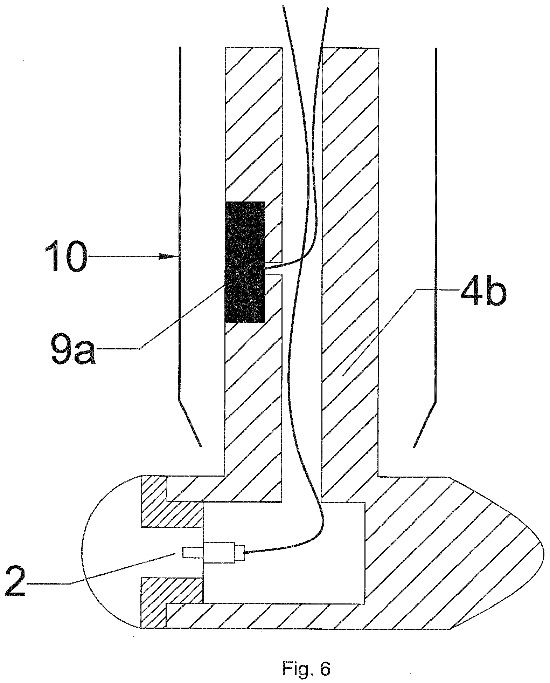

Figur 6 zeigt die Messeinrichtung nach Figur 5, wobei der rohrförmige Abschnitt (4b) der Halterung (4) von einer Hülse (10) umgeben wird, die schwingungsisoliert an der Rahmenkonstruktion des Bandförderers gehalten wird. Die Hülse (10) sorgt dafür, dass nur Signale aus der Kollision zwischen den Feststoffpartikeln und dem kugelsegmentförmigen Anprallkörper (1) erfasst werden. Des Weiteren wird eine Messung unabhängig von der Höhe der Beladung auf dem Bandförderer gewährleistet.

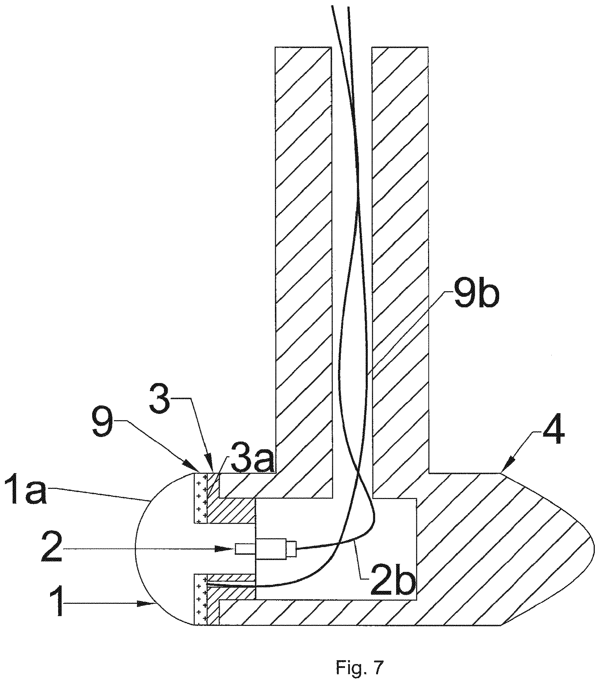

Die in Figur 7 dargestellte Messeinrichtung unterscheidet sich von der Messeinrichtung nach den Figuren 5 durch die Anordnung und Ausführung des Kraftaufnehmers (9). Der Kraftaufnehmer (9) ist als Druckmessdose ausgestaltet und zwischen der Grundfläche des als Kreissegment ausgestalteten Kollisionsteils (1a) und dem kreisringförmigen Abschnitt (3a) der Schwingungsisolierung (3) angeordnet. Ein wesentlicher Vorteil dieser Ausführungsform der Erfindung besteht darin, dass eine Übertragung von Schwingungen von der Halterung (4) sowohl auf den Schwingungsaufnehmer (2) als auch den Kraftaufnehmer (9) mit lediglich einer Schwingungsisolierung (3) erreicht wird. Eine Verfälschung der Signale des Kraftaufnehmers (9) wird ebenfalls wirksam vermieden, da der Kraftaufnehmer in Wirkrichtung der durch die anprallenden Feststoffpartikel verursachten Kräfte angeordnet ist.

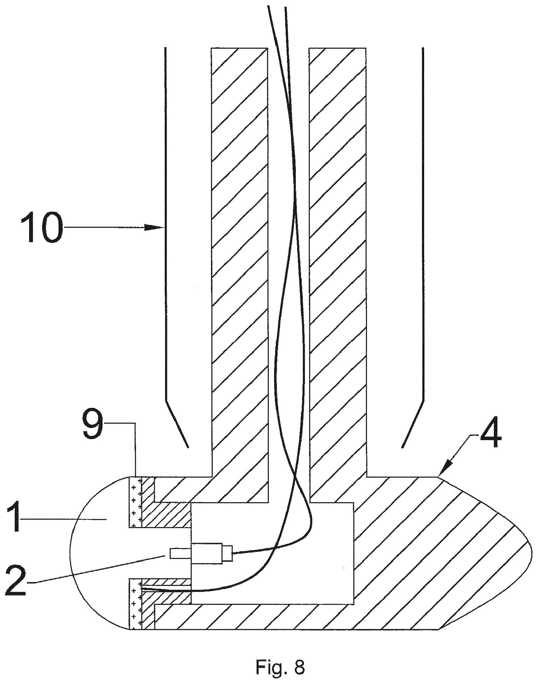

Figur 8 zeigt die Ausführungsform einer Messeinrichtung nach Figur 7, deren rohrförmiger Abschnitt (4b) der Halterung (4) von einer Hülse (10) umgeben wird. Die Hülse (10) bewirkt, dass der Förderstorm im Bereich der Messeinrichtung konstant gehalten wird.

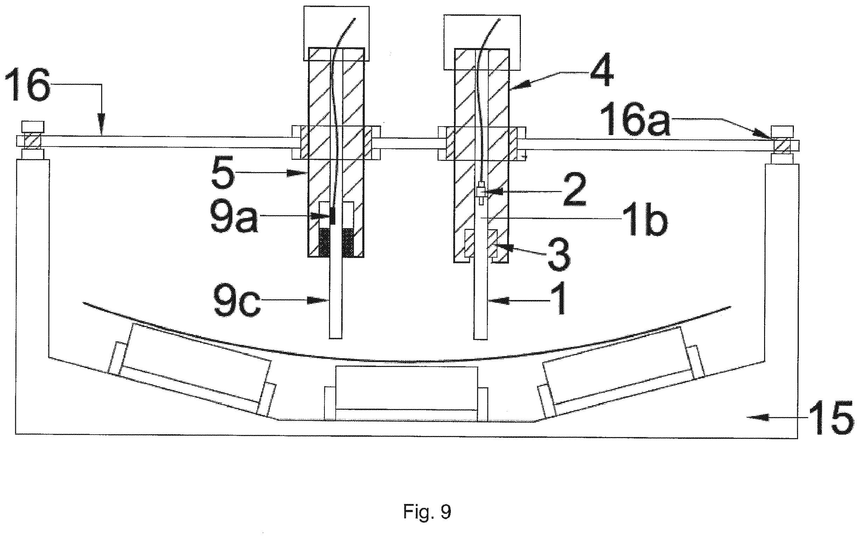

Die Figur 9 zeigt eine weitere Ausführungsform einer Messeinrichtung zur kontinuierlichen Bestimmung der Korngrößenverteilung von Granulaten auf einem Bandförderer, wobei abweichend zu der Messeinrichtung nach Figur 3 der Schwingungsaufnehmer (2) und der Kraftaufnehmer (9) nicht in eine Baugruppe integriert sind. Der Anprallkörper (1) ist wie bei der Ausführung nach Figur 3 als Stab (1) ausgebildet, dessen Halteteil (1b) von einer al Hülse ausgebildeten Halterung (4) bündig aufgenommen wird. Zwischen der Halterung (4) und dem Kollisionsteil (1a) des Anprallkörpers (1) ist eine Schwingungsisolierung (3) angeordnet. Der als Beschleunigungssensor ausgestaltete Schwingungsaufnehmer (2) ist an der Stirnseite des Halteteils (1b) verschraubt. Die Halterung (4) ist außermittig an der Rahmenkonstruktion (16) des Bandförderers (15) höhenverstellbar befestigt.

Der Kraftaufnehmer (9) weist einen stabförmigen, elastisch verformbaren Verformungskörper (9c) auf, wobei auf der Oberfläche des Stabes ein Dehnungsmessstreifen (9a) derart angebracht ist, dass sich dessen elektrischer Widerstand bei einer elastischen Verformung des Verformungskörpers (9c) in Folge des Anpralls der Feststoffpartikel auf dem Bandförderer (15) ändert. Der Verformungskörper (9c) wird von einer Führungshülse (59 aufgenommen. Der DMS (9a) ist in dem Ringraum (5a) der Führungshülse angeordnet, der durch die Dichtringe (6) gegen eindringende Verschmutzungen, insbesondere Feststoffpartikel aus dem Förderstrom geschützt ist. Die Führungshülse (5) ist benachbart zu der Halterung (4) außermittig an der Rahmenkonstruktion (16) des Bandförderers (15) höhenverstellbar befestigt.

Vor Beginn des Regelbetriebs der Signalverarbeitung mit einer der vorstehend beschriebenen Messeinrichtungen ist deren Kalibrierung erforderlicher. Die Kalibrierung besteht aus zwei Schritten:
1. Erstellen einer Normierfunktion, in dem eine Korrelation zwischen den elektrischen Signalen des Schwingungsaufnehmers (2) und den mit dem Kraftausnehmer (9) erfassten Signalen bei unterschiedlichen, bekannten Strömungsenergien ermittelt wird.
2. Erstellen mindestens einer Kalibrierfunktion, in dem eine Korrelation zwischen den mit der Normierfunktion verarbeiteten elektrischen Signalen des Schwingungsaufnehmers (2) und der mit einer herkömmlichen Methode zur Bestimmung der Korngrößenverteilung bestimmten Korngrößenverteilung einer Probe des Granulats ermittelt wird.

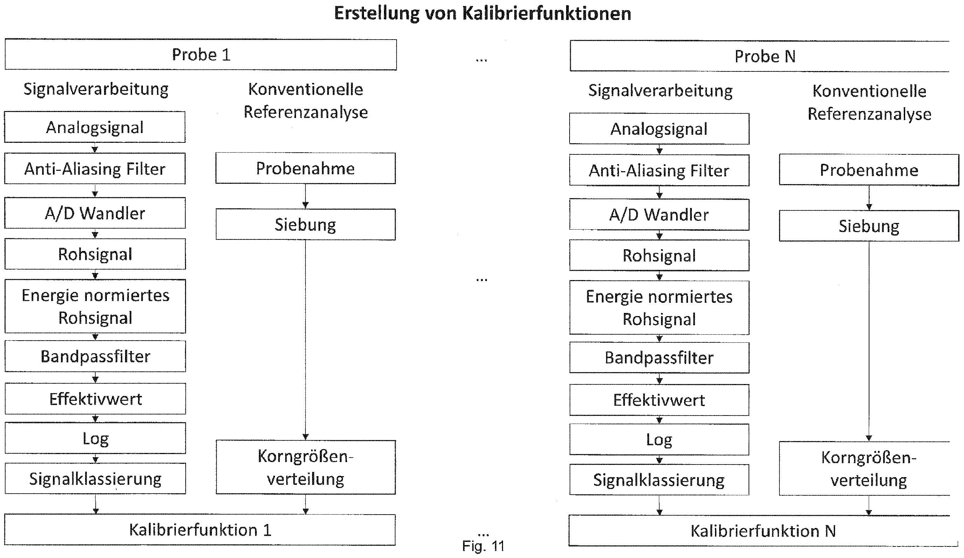

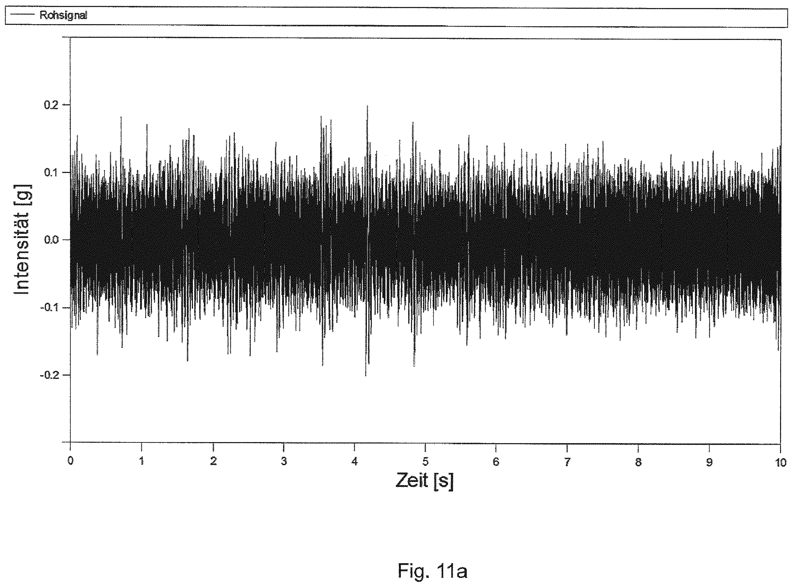

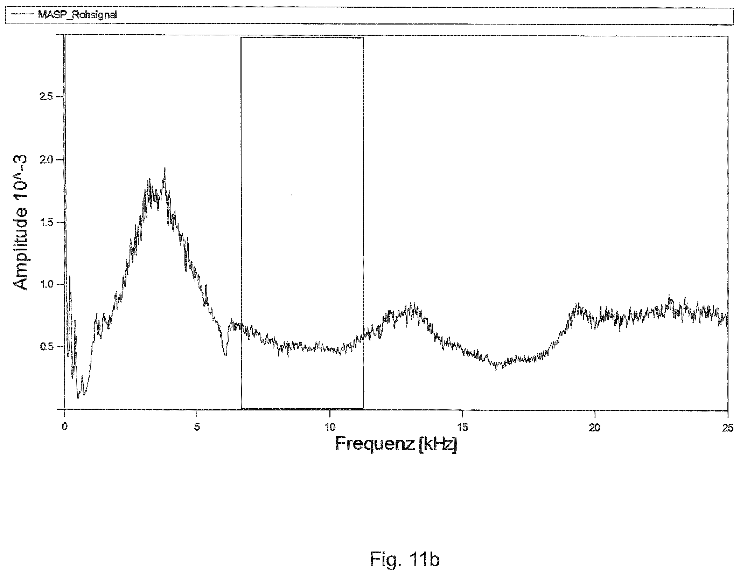

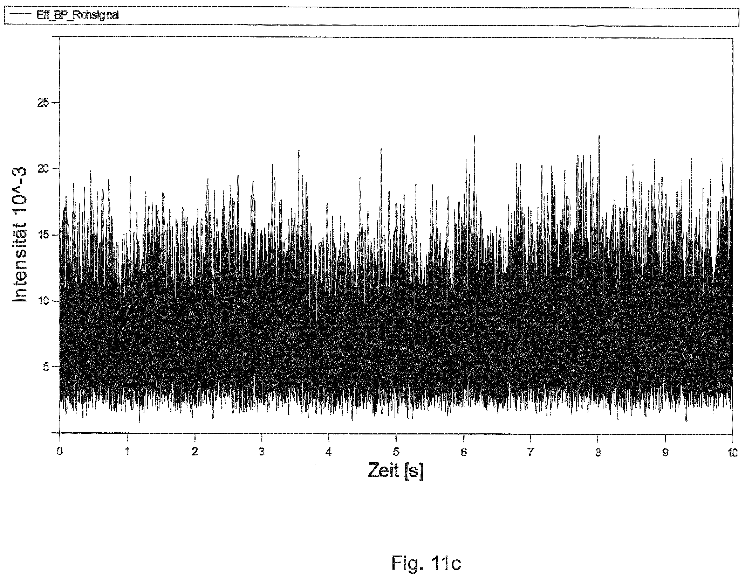

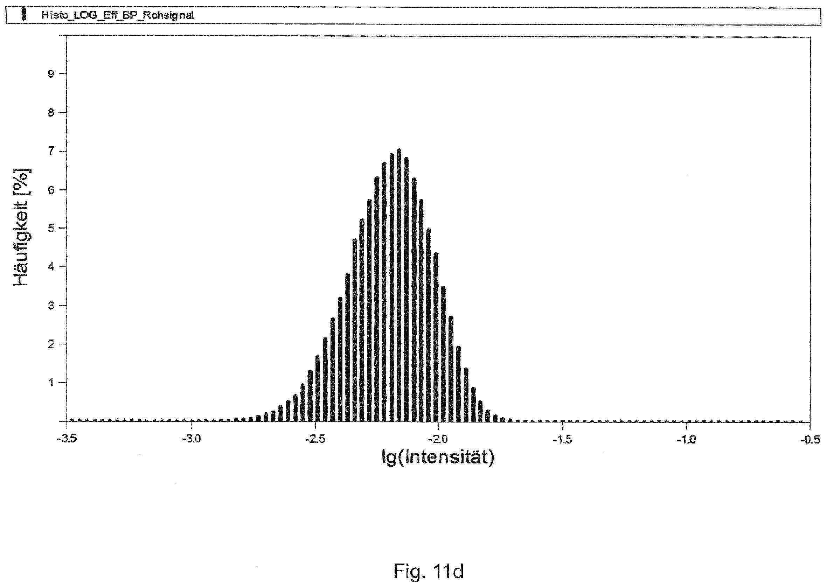

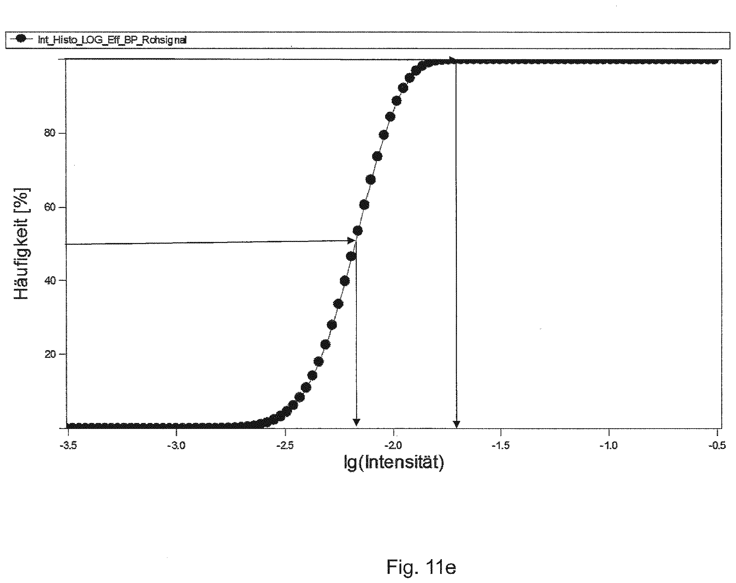

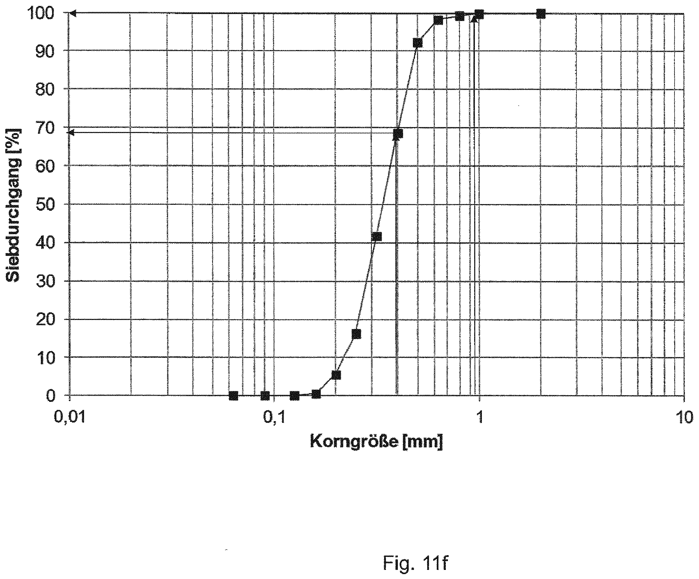

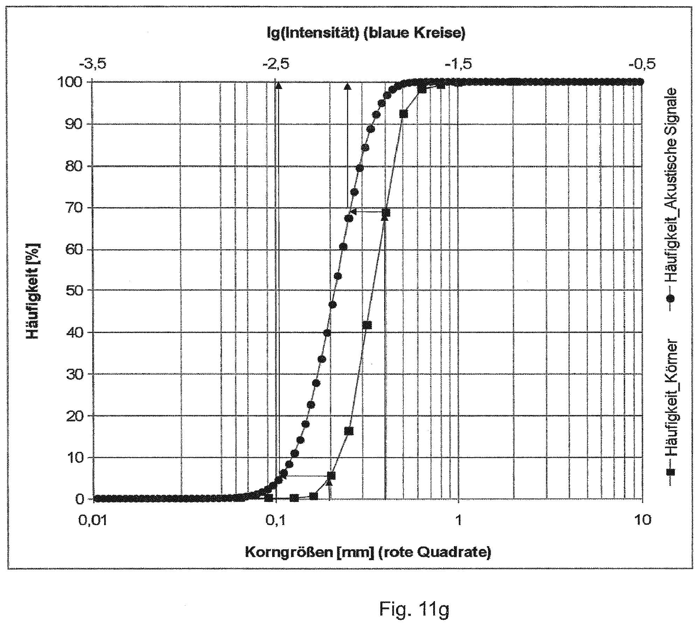

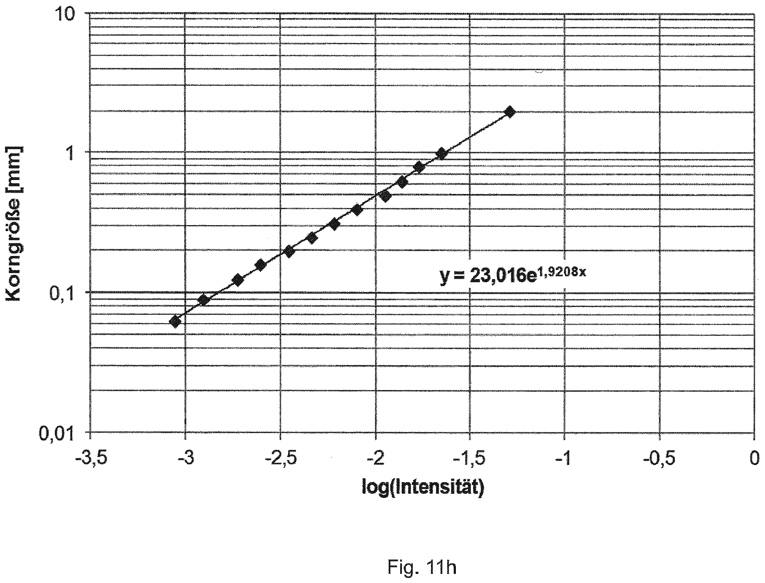

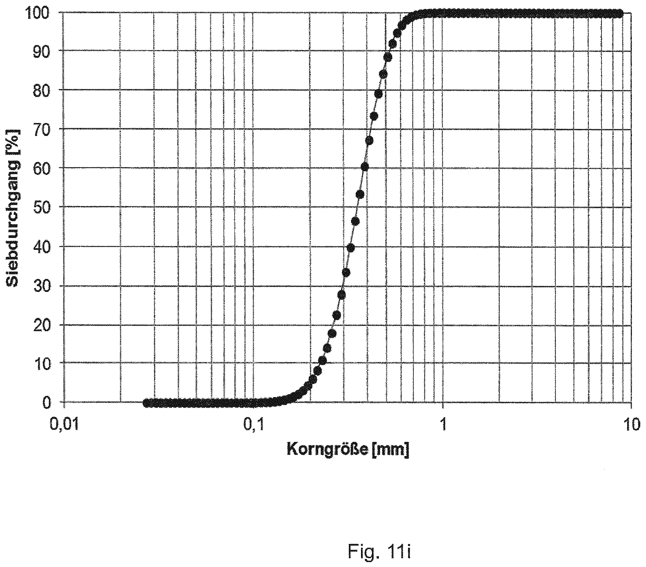

Nachfolgend wird die Kalibrierung für ein Granulat mit einer relativ geringen zu erwartenden Schwankung der Korngrößenverteilung anhand von Figur 11 näher erläutert, wobei lediglich eine Kalibrierfunktion erstellt wird:
Mit dem Schwingungsaufnehmer (2) der Messeinrichtung wird der Körperschall, resultierend aus dem Anprall der mit dem Anprallkörper (1) kollidierenden Feststoffpartikel als Analogsignal erfasst. Das Analogsignal wird mit einer Abtastrate, von beispielsweise 51.200 S/s mit einem Analogdigitalwandler (A/D Wandler) abgetastet und in ein zeitdiskretes Signal umgewandelt und digitalisiert. Die Abtastrate ist vorzugsweise doppelt so hoch wie die höchste Spektralkomponente Fₐ. Bei der Abtastung von Signalen mit Frequenzen oberhalb der höchsten Spektralkomponente treten Fehler wie der Alias-Effekt auf. Zur Reduzierung derartiger Abtastfehler wird in einer vorteilhaften Ausgestaltung der Erfindung die Eingangsfrequenz des A/D Wandlers mittels eines analogen Tiefpassfilters (Anti-Aliasing Filter) beschränkt.

Das mit Hilfe des A/D Wandlers digitalisierte, zeitabhängige Rohsignal ist beispielhaft in Figur 11a dargestellt, wobei auf der x-Achse die Zeit und auf der y-Achse die Signalintensität abgetragen wird.

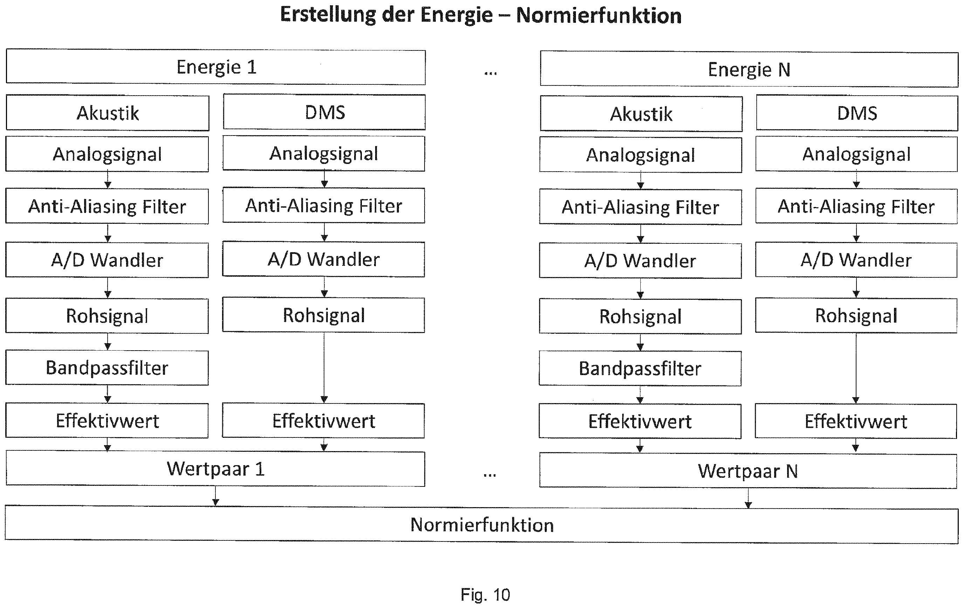

Das Rohsignal wird mit einer zuvor erstellten Normierfunktion deren Ermittlung weiter unten anhand von Figur 10 erläutert wird, normiert, um die Abhängigkeit der erfassten elektrischen Signale des Schwingungsaufnehmers von der Strömungsenergie zu eliminieren.

Das normierte Rohsignal wird mit einem Bandpassfilter gefiltert, um Störgeräusche, die nicht durch den Anprall der Feststoffpartikel, sondern Umgebungsgeräusche ausgelöst werden, zu reduzieren. Die Einstellung des Bandpassfilters erfolgt mit Hilfe einer Spektralanalyse. Beispielsweise wird der Bandpassfilter auf einen Bereich von 7 bis 11 kHz gesetzt, wie dies in Figur 11b erkennbar ist.

Aus den gefilterten und normierten Rohsignalen werden gleitende Effektivwerte gebildet. Dies ist der quadratische Mittelwert des zeitlich veränderten, abgefilterten und normierten Rohsignales. Eine Darstellung der gleitenden Effektivwerte der Signalstärke ergibt sich aus Figur 11c. Anschließend werden die Effektivwerte der Signalstärke logarithmiert.

Sodann erfolgt eine Signalklassierung der logarithmierten Effektivwerte in mehrere Klassen mit unterschiedlicher Signalstärke. Beispielsweise werden die logarithmierten Effektivwerte auf 100 Klassen aufgeteilt. Die Häufigkeitsverteilung über die 100 Klassen mit unterschiedlicher Signalstärke ergibt sich aus der Figur 11d.

Durch Integration der Signalintensitätswerte erhält man die Summenverteilung der Effektivwerte, wie sie aus Figur 11e erkennbar sind. Die Summenverteilungskurve beginnt mit dem Wert 0 und endet bei 100%. Figur 11e lässt sich beispielsweise entnehmen, dass 50% der Signalwerte kleiner als -2,18 und 100% der Signalintensitätswerte kleiner als - 1,65 sind. Die über einen beliebigen vorwählbaren Zeitraum vorgenommene Signalklassierung der elektrischen Signale des Schwingungsaufnehmers (2) ist damit abgeschlossen.

Aus dem zur Kalibrierung untersuchten Förderstrom wird außerdem während des Untersuchungszeitraums eine Probe gezogen, deren Korngrößenverteilung mit einer herkömmlichen Methode zur Bestimmung der Korngrößenverteilung ermittelt wird. Hierzu wird beispielsweise eine trockene Siebklassierung durchgeführt. Die im Wege der Siebklassierung bestimmte Korngrößenverteilung der Probe ist beispielhaft in Figur 11f dargestellt. Aus der Siebkurve lässt sich beispielsweise ablesen, dass sämtliche Feststoffpartikel kleiner als 1 Millimeter sind. Des Weiteren lässt sich ablesen, wie viele Gewichtsprozente der Feststoffpartikel kleiner als eine bestimmte Größe (Siebklasse) sind. In dem dargestellten Beispiel sind beispielsweise 69 Gewichtsprozente der Feststoffpartikel kleiner als 0,4mm.

Zur Ermittlung der Kalibrierfunktion wird nun eine Korrelation zwischen der Summenverteilung der Effektivwerte (vgl. Figur 11e) und der im Wege der Siebklassierung ermittelten Korngrößenverteilung der Probe des Granulats (vgl. Figur 11f) ermittelt.

Figur 11g veranschaulicht, wie die Summenverteilung der Effektivwerte und die im Wege der Siebklassierung ermittelte Korngrößenverteilung in ein Diagramm eingetragen werden. Wobei auf der x-Achse einerseits die Korngrößen in mm und andererseits die logarithmierte Effektivwert der Signalstärke (Intensität) aufgetragen werden. Aus dem Diagramm ergibt sich beispielsweise, dass das im Wege der Siebklassierung untersuchte Material 6 Gewichtsprozente Feststoffpartikel aufweist, die kleiner als 0,2 mm sind. Dem gleichen Prozentanteil entspricht der logarithmierte Effektivwert von -2,46. Weiter ergibt sich beispielhaft aus dem Diagramm nach Figur 11g, dass das im Wege der Siebklassierung untersuchte Material 69 Gewichtsprozente an Feststoffpartikeln aufweist, die kleiner als 0,4 mm sind. Dem gleichen Prozentanteil entspricht ein logarithmierter Effektivwert von -2,1. Entsprechend den beiden vorstehend dargelegten Beispielen werden für sämtliche Kornklassen die entsprechenden logarithmierten Effektivwerte anhand des Diagramms ermittelt.

Auf der Basis dieser Werte wird die Korrelation, d.h. die Kalibrierfunktion ermittelt, wie beispielhaft in Figur 11h dargestellt ist.

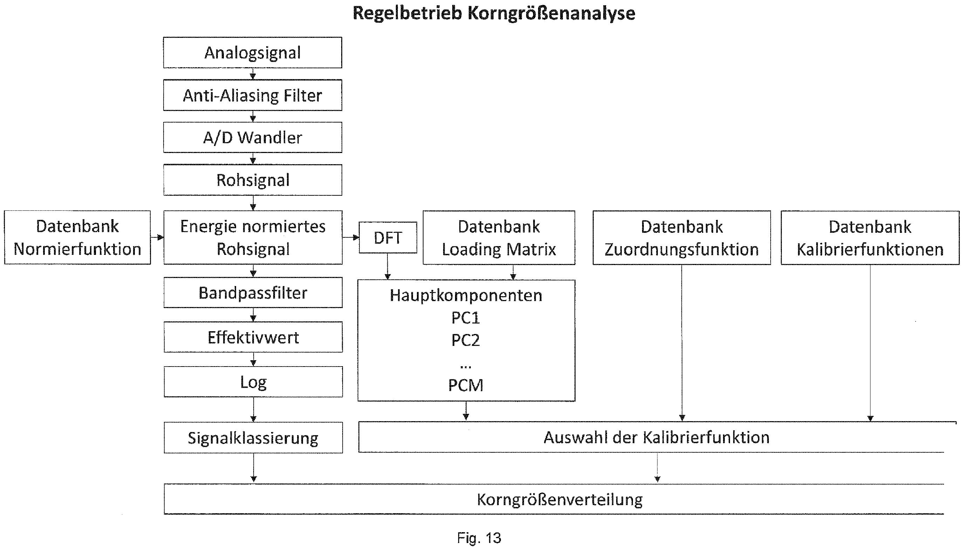

Die derart ermittelte Kalibrierfunktion wird in dem sich anschließenden Regelbetrieb der Signalverarbeitung der Messeinrichtung entsprechend Figur 13 linke Bildhälfte angewendet. Die Signalverarbeitung erfolgt in gleicher Weise wie bei der Kalibrierung gemäß Figur 11 durch eine Signalklassierung der elektrischen Signale des Schwingungsaufnehmers (2). Durch Anwenden der zuvor ermittelten Kalibrierfunktion nach Figur 11h lässt sich aus der im Wege der Signalklassierung gewonnenen Summenverteilung der Effektivwerte eine Siebkurve aus den akustischen Signalen bilden, wie dies in Figur 11i dargestellt ist. Aus dieser Siebkurve lässt sich die Korngrößenverteilung anhand der mit dem Schwingungsaufnehmer aufgenommen elektrischen Signale zuverlässig ermitteln.

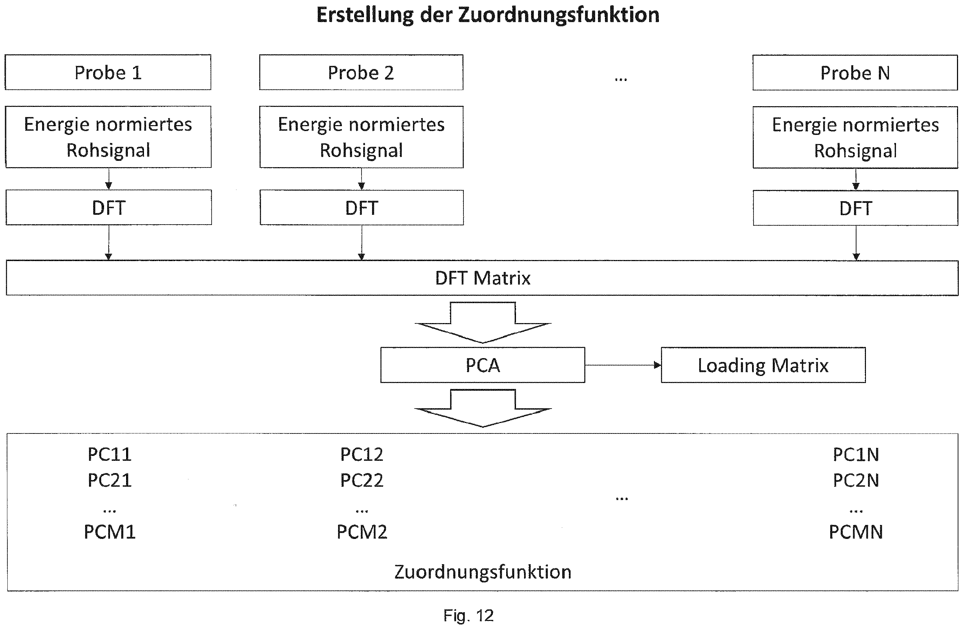

Für den Fall, dass die zu erwartenden Schwankungen der Korngrößenverteilung des Granulats einer größeren Variation unterliegen, werden vor Beginn des Regelbetriebs zur Signalverarbeitung der elektrischen Signale zum Bestimmen der Korngrößenverteilung im Rahmen der Kalibrierung für 1-N Proben aus dem Förderstrom mit unterschiedlichen Korngrößenverteilungen entsprechend der zu erwartenden Schwankungsbreite jeweils eine Kalibrierfunktion einschließlich einer Zuordnungsfunktion (Figur 12) erstellt. Mit der Zuordnungsfunktion wird im anschließenden Regelbetrieb die für die Korngrößenverteilung passende Kalibrierfunktion 1 - N ausgewählt.

Die Kalibrierfunktionen für die 1 bis N Proben werden jeweils im Wege einer Signalklassierung ermittelt, wie sich dies aus Figur 11 ergibt. Die zur Signalklassierung erforderlichen Verfahrensschritte für jede der Proben 1 - N stimmen mit dem beschriebenen Ablauf der Erstellung der Kalibrierfunktion für nur eine Probe überein, sodass zur Vermeidung von Wiederholungen auf die obigen Ausführungen Bezug genommen wird. Die für jede Probe 1 - N ermittelte Korrelation wird als Kalibrierfunktion 1 - N in einer Datenbank gespeichert.

Aus Figur 12 ergibt sich, wie im Rahmen der Kalibrierung die Zuordnungsfunktion erstellt wird. Für jede Probe 1 - N mit stark schwankender Korngrößenverteilung werden folgende Schritte durchgeführt:
Die energienormierten Rohsignale der Proben 1 - N werden jeweils einer Frequenzanalyse unterzogen. Hierzu wird eine diskrete Fourier Transformation (DFT) vorgenommen. Aus dem für die jeweilige Probe 1 - N erzeugten DFT's wird ein Mittelwert gebildet, aus dem die Frequenzkomponenten ermittelt werden. Dabei gilt, dass die Anzahl der Proben größer sein muss als die Anzahl der Frequenzkomponenten.

Aus den Frequenzkomponenten der jeweiligen Proben 1 - N wird eine DFT-Matrix gebildet. Die Zeilen dieser DFT-Matrix entsprechen den Frequenzkomponenten, die Spalten der Anzahl der Proben. Die DFT-Matrix wird einer Hauptkomponentenanalyse (PCA) unterzogen. Das Ergebnis der PCA in Form der jeweiligen Hauptkomponenten (PC1 - PCM) der jeweiligen Proben sowie von Hauptkomponenten - Koeffizienten (auch als Loading Matrix bezeichnet) werden in der Datenbank gespeichert.

Die Werte der Hauptkomponenten (PC1 - PCM) der jeweiligen Probe 1 - N definieren ein relativ eng begrenztes Spektrum der Korngrößenverteilung, dem die Korngrößenverteilung der zugehörigen Probe 1- N und die zu der Probe zuvor ermittelte Kalibrierfunktion 1 - N zugeordnet werden kann.

Im Regelbetrieb der Signalverarbeitung (Figur 13) bei starken zu erwartenden Schwankungen der Korngrößenverteilung wird das normierte Rohsignal ebenfalls zusätzlich zu der Signalklassierung einer diskreten Fourier-Transformation (DFT) unterzogen.

Aus dem Mittelwert der DFT's werden die Frequenzkomponenten errechnet. Durch Multiplikation der Frequenzkomponenten mit dem in der Datenbank gespeicherten Hauptkomponenten-Koeffizienten (Loading Matrix) werden die Hauptkomponenten PC1 - PCM ermittelt. Die Hauptkomponenten PC1 - PCM werden mit den Hauptkomponenten, die in der Kalibrierphase aus den Signalen der Proben 1 - N erzeugt wurden, verglichen. Der Vergleich erfolgt, in dem die Differenz zwischen den ermittelten Werten der Hauptkomponenten, die aus dem Signal des zu untersuchenden Granulats erzeugt wurden, und den Werten der Hauptkomponenten PC1 - PCM, die in der Datenbank gespeichert sind und der jeweiligen Probe 1 - N zugeordnet sind, errechnet wird. Die Kalibrierfunktion derjenigen Probe 1 -N, für die diese Differenz am geringsten ist, wird ausgewählt.

Durch Anwenden der ausgewählten Kalibrierfunktion lässt sich aus der im Wege der Signalklassierung gewonnenen Summenverteilung der Effektivwerte eine Siebkurve aus den akustischen Signalen bilden. Aus dieser Siebkurve lässt sich die Korngrößenverteilung anhand der mit dem Schwingungsaufnehmer aufgenommen elektrischen Signale zuverlässig ermitteln.

Nachfolgend wird anhand von Figur 10 erläutert, wie die Normierfunktion erstellt wird:
Zur Erstellung der Normierfunktion wird eine Korrelation zwischen den elektrischen Signalen jedes Schwingungsaufnehmers (2), d.h. dem akustischen Signal und dem von dem Kraftaufnehmer erfassten Signalen der Strömungsenergie des zu untersuchenden Förderstroms bei unterschiedlichen, jedoch bekannten Strömungsenergien (Energie 1 bis Energie N) ermittelt.

Die akustischen Signale werden ermittelt, in dem das analoge Signal des Schwingungsaufnehmers (2) mit Hilfe eines A/D Wandlers in digitale Rohsignale umgewandelt wird. Optional kann ein Anti-Aliasing Filter bzw. Tiefpassfilter vorgesehen sein, um Abtastfehler zu reduzieren. Das Rohsignal wird mit einem Bandpassfilter gefiltert. Aus den gefilterten Rohsignalen werden gleitende Effektivwerte in einem festgelegtem Zeitraum gebildet. In gleicher Weise wird in dem festgelegten Zeitraum das Analogsignal des Kraftaufnehmers aufbereitet, wobei eine Filterung der Rohsignale mit einem Bandpassfilter nicht erforderlicher ist. Durch Mittelwertbildung der Effektivwerte des Schwingungsaufnehmers (2) und Mittelwertbildung der Effektivwerte des Kraftaufnehmers (2) bei konstanter, vorgegebener Strömungsenergie (Energie 1) ergibt sich das erste Wertpaar für die Normierfunktion. Durch Verändern der Strömungsenergie des Förderstroms werden auf die gleiche Weise weitere Wertepaare ermittelt. Aus den Wertepaaren 1 bis N für N unterschiedliche Strömungsenergien lässt sich die Normierfunktion, insbesondere im Wege der Korrelation ableiten.

Durch Anwenden der Normierfunktion auf das digitalisierte Rohsignal des Schwingungsaufnehmers wird der Einfluss einer wechselnden Strömungsenergie des zu untersuchenden Förderstroms auf die Ergebnisse der im Wege der Signalklassierung ermittelten Korngrößenverteilung eliminiert.

| **Nr.** | **Bezeichnung** |
|---|---|
| 1. | Anprallkörper |
| 1a. | Kollisionsteil |
| 1b. | Halteteil |
| 2. | Schwingungsaufnehmer |
| 2a. | Neutrale Achse |
| 2b. | Signalleitung |
| 3. | Schwingungsisolierung |
| 3a. | Kreisringförmiger Abschnitt |
| 3b. | Hohlzylindrischer Abschnitt |
| 4 . | Halterung |
| 4a. | Rohrförmiger Abschnitt |
| 4b. | Rohrförmiger Abschnitt |
| 4c. | Höhlung |
| 5. | Führungshülse |
| 5a. | Ringraum |
| 6. | Dichtringe |
| 7. | Halteteil |
| 8 . | Kappe |
| 9. | Kraftaufnehmer |
| 9a. | Dehnungsmessstreifen (DMS) |
| 9b. | Signalleitung |
| 9c. | Verformungskörper |
| 9d. | Druckmessdose |
| 10. | Hülse |
| 13. | Förderrichtung |
| 14. | Rohrleitung |
| 15. | Bandförderer |
| 16. | Rahmenkonstruktion |
| 16a. | Schwingungsdampfer |

## Patentansprüche

1. Verfahren zum kontinuierlichen Bestimmen der Korngrößenverteilung von Granulaten bestehend aus Feststoffpartikeln mit unterschiedlichen Korngrößen umfassend die Schritte
- Transportieren der Feststoffpartikel in einer Förderrichtung (13) in einen Förderstrom, wobei Feststoffpartikel mit mindestens einem als Wellenleiter eingerichteten Anprallkörper (1) kollidieren und akustische Signale erzeugen, die sich in jedem Anprallkörper (1) als Körperschallwellen ausbreiten,
- Erfassen der akustischen Signale und Umformen in elektrische Signale mit Hilfe mindestens eines Schwingungsaufnehmers (2),
- Erfassen der Strömungsenergie des Förderstroms und Umformen in elektrische Signale mit Hilfe mindestens eines Kraftaufnehmers (9), wobei die Strömungsenergie durch die Geschwindigkeit und Konzentration bzw. Schüttdichte der Feststoffpartikel des Granulats bestimmt wird,
- Signalverarbeitung der elektrischen Signale jedes Schwingungsaufnehmers (2) unter Berücksichtigung der elektrischen Signale jedes Kraftaufnehmers (9) zur Bestimmung der Korngrößenverteilung, wobei
- vor Beginn der Signalverarbeitung der elektrischen Signale zum Bestimmen der Korngrößenverteilung mindestens eine Normierfunktion erstellt wird, in dem ein Zusammenhang zwischen den elektrischen Signalen jedes Schwingungsaufnehmers (2) und den mit dem Kraftaufnehmer (9) erfassten Signalen der Strömungsenergie des Förderstroms bei unterschiedlichen, bekannten Strömungsenergien ermittelt wird,
- vor Beginn der Signalverarbeitung der elektrischen Signale zum Bestimmen der Korngrößenverteilung mindestens eine Kalibrierfunktion erstellt wird, in dem eine Korrelation zwischen den mit der Normierfunktion verarbeiteten elektrischen Signalen jedes Schwingungsaufnehmers (2) und der mit einer herkömmlichen Methode zur Bestimmung der Korngrößenverteilung bestimmten Korngrößenverteilung des Granulats ermittelt wird und
- die Signalverarbeitung der elektrischen Signale zum Bestimmen der Korngrößenverteilung folgende Schritte umfasst:
- Normieren der von dem Schwingungsaufnehmer (2) erfassten elektrischen Signale mit der Normierfunktion in Abhängigkeit von den erfassten elektrischen Signalen des Kraftaufnehmers (9), um die Abhängigkeit der erfassten elektrischen Signale des Schwingungsaufnehmers (2) von der Strömungsenergie zu eliminieren,
- Ermitteln der Korngrößenverteilung durch Anwenden der Kalibrierfunktion auf die normierten elektrischen Signale.

2. Verfahren nach Anspruch 1, **dadurch gekennzeichnet, dass** die akustischen Signale mit mindestens einem Beschleunigungssensor mit einer neutralen Achse (2a) erfasst werden und jeder Beschleunigungssensor derart angeordnet wird, dass die Förderrichtung (13) des Granulats im Augenblick des Anpralls mit der neutralen Achse (2a) übereinstimmt.

3. Verfahren nach Anspruch 1 oder 2, **dadurch gekennzeichnet, dass** jeder Anprallkörper (1) schwingungsisoliert mit einer Halterung (4) in dem Förderstrom gehaltert wird.

4. Verfahren nach einem der Ansprüche 1 bis 3, **dadurch gekennzeichnet, dass** in dem Förderstrom transportierte Feststoffpartikel mit einem Verformungskörper (9c) mindestens eines Kraftaufnehmers (9) kollidieren und den Verformungskörper (9c) elastisch verformen, wodurch sich der elektrische Widerstand mindestens eines auf dem Verformungskörper (9c) angebrachten Dehnungsmessstreifens (9a) des Kraftaufnehmers (9) ändert.

5. Verfahren nach einem der Anspruch 1 bis 3, **dadurch gekennzeichnet, dass** die mit dem Anprallkörper (1) kollidierenden Feststoffpartikel den Anprallkörper (1) elastisch verformen, wodurch sich der elektrische Widerstand mindestens eines auf dem Anprallkörper angebrachten Dehnungsmessstreifens (9a) des Kraftaufnehmers (9) ändert.

6. Verfahren nach einem der Ansprüche 1 bis 3, **dadurch gekennzeichnet, dass** die mit einer Halterung (4) für den Anprallkörper (1) kollidierenden Feststoffpartikel die Halterung (4) elastisch verformen, wodurch sich der elektrische Widerstand mindestens eines auf die Halterung (4) angebrachten Dehnungsmessstreifens (9a) des Kraftaufnehmers (9) ändert.

7. Verfahren nach einem der Ansprüche 1 bis 3, **dadurch gekennzeichnet, dass** das Erfassen der Strömungsenergie mit Hilfe mindestens eines an dem Anprallkörper (1) angeordneten Kraftaufnehmers (9) erfolgt.

8. Verfahren nach einem der Ansprüche 1 bis 7, **dadurch gekennzeichnet, dass** das Erfassen der akustischen Signale und der Strömungsenergie zeitgleich erfolgt.

9. Verfahren nach Anspruch 8, **dadurch gekennzeichnet, dass** das Erfassen der akustischen Signale und der Strömungsenergie in Bezug auf ein im Wesentlichen übereinstimmendes Kollektiv der Feststoffpartikel derart erfolgt, so dass Verfälschungen der Ergebnisse der Signalverarbeitung durch einen zu großen Abstand zwischen dem Kraftaufnehmer und dem Schwingungsaufnehmer vermieden werden.

10. Verfahren nach einem der Ansprüche 1 bis 9, **dadurch gekennzeichnet, dass** das Erfassen der akustischen Signale und der Strömungsenergie fortlaufend erfolgt.

11. Verfahren nach einem der Ansprüche 1 bis 10, **dadurch gekennzeichnet, dass** vor Beginn der Signalverarbeitung der elektrischen Signale zum Bestimmen der Korngrößenverteilung eine Kalibrierfunktion erstellt wird, in dem folgende Schritte durchgeführt werden:
- Umwandeln der von dem Schwingungsaufnehmer (2) erfassten elektrischen Signale mit einem Analog-/Digitalwandler in digitale Rohsignale,
- Normieren der Rohsignale mit der Normierfunktion in Abhängigkeit von den erfassten elektrischen Signalen des Kraftaufnehmers (9),
- Filtern der normierten Rohsignale mit einem Bandpassfilter,
- Bilden gleitender Effektivwerte der Signalstärke aus den gefilterten normierten Rohsignalen,
- Logarithmieren der Effektivwerte,
- Klassieren der logarithmierten Effektivwerte in mehrere Klassen mit unterschiedlicher Signalstärke,
- Ermitteln einer Korrelation zwischen der Summenverteilung der Effektivwerte in den vorgenannten Klassen und der mit einer herkömmlichen Methode zur Bestimmung der Korngrößenverteilung bestimmten Korngrößenverteilung des Granulats.

12. Verfahren nach Anspruch 11, **dadurch gekennzeichnet, dass** die Signalverarbeitung der elektrischen Signale zum Bestimmen der Korngrößenverteilung folgende Schritte umfasst:
- Umwandeln der von dem Schwingungsaufnehmer erfassten elektrischen Signale mit einem Analog-/Digitalwandler in digitale Rohsignale,
- Normieren der Rohsignale mit der Normierfunktion in Abhängigkeit von den erfassten elektrischen Signalen des Kraftaufnehmers (9),
- Filtern der normierten Rohsignale mit einem Bandpassfilter,
- Bilden gleitender Effektivwerte der Signalstärke aus den gefilterten normierten Rohsignalen,
- Logarithmieren der Effektivwerte,
- Klassieren der logarithmierten Effektivwerte in mehrere Klassen mit unterschiedlicher Signalstärke,
- Ermitteln der Korngrößenverteilung mit Hilfe der Kalibrierfunktion aus der Summenverteilung der Effektivwerte in den vorgenannten Klassen.

13. Verfahren nach nach einem der Ansprüche 1 bis 10, **dadurch gekennzeichnet, dass** vor Beginn der Signalverarbeitung der elektrischen Signale zum Bestimmen der Korngrößenverteilung mehrere Kalibrierfunktion erstellt werden, in dem für N Proben des Förderstroms mit unterschiedlichen Korngrößenverteilungen jeweils eine Kalibrierfunktion erstellt wird, in dem für jede Probe 1 - N folgende Schritte durchgeführt werden:
- Umwandeln der von dem Schwingungsaufnehmer erfassten elektrischen Signale mit einem Analog-/Digitalwandler in digitale Rohsignale,
- Normieren der Rohsignale mit der Normierfunktion in Abhängigkeit von den erfassten elektrischen Signalen des Kraftaufnehmers,
- Filtern der normierten Rohsignale mit einem Bandpassfilter,
- Bilden gleitender Effektivwerte der Signalstärke aus den Rohsignalen,
- Logarithmieren der Effektivwerte,
- Klassierung der logarithmierten Effektivwerte in mehrere Klassen mit unterschiedlicher Signalstärke,
- Ermitteln einer Korrelation zwischen der Summenverteilung der Effektivwerte in den vorgenannten Klassen und der mit einer herkömmlichen Methode zur Bestimmung der Korngrößenverteilung bestimmten Korngrößenverteilung des Granulats der jeweiligen Probe,
- Speichern der ermittelten Korrelation für jede Probe 1 - N als Kalibrierfunktion 1 - N in einer Datenbank,
- Erstellen einer Zuordnungsfunktion, in dem für jede Probe 1 - N folgende Schritte durchgeführt werden:
- Unterziehen der normierten Rohsignale jeder Probe 1 - N einer diskreten Fourier Transformation (DFT),
- Bilden eines Mittelwertes und Ermittlung von Frequenzkomponenten aus der für jede Probe 1 - N erzeugten DFT's,
- Bilden einer DFT-Matrix aus den Frequenzkomponenten der Proben 1 - N,
- Unterziehen der DFT-Matrix einer Hauptkomponentenanalyse zur Ermittlung der Werte der Hauptkomponenten (PC1 ... PCM) für jede Probe 1 - N und von Hauptkomponenten-Koeffizienten (Loading Matrix),
- Speichern der Hauptkomponenten-Koeffizienten (Loading Matrix) und der Werte der Hauptkomponenten (PC1 ... PCM) für jede Probe 1 - N in einer Datenbank,
- Zuordnen der Werte der Hauptkomponenten (PC1 ... PCM) zu der für die jeweilige Probe ermittelten Kalibrierfunktion 1 - N.

14. Verfahren nach Anspruch 13, **dadurch gekennzeichnet, dass** die Signalverarbeitung der elektrischen Signale zum Bestimmen der Korngrößenverteilung folgende Schritte umfasst:
- Umwandeln der von dem Schwingungsaufnehmer (2) erfassten elektrischen Signale mit einem Analog-/Digitalwandler in digitale Rohsignale,
- Normieren der Rohsignale mit der Normierfunktion in Abhängigkeit von den erfassten elektrischen Signalen des Kraftaufnehmers (9),
- Filtern der normierten Rohsignale mit einem Bandpassfilter,
- Bilden gleitender Effektivwerte der Signalstärke aus den gefilterten normierten Rohsignalen,
- Logarithmieren der Effektivwerte,
- Aufteilen der logarithmierten Effektivwerte in mehrere Klassen mit unterschiedlicher Signalstärke,
- Zusätzliches Unterziehen der normierten Rohsignale einer diskreten Fourier Transformation (DFT),
- Bilden eines Mittelwertes und Ermittlung von Frequenzkomponenten aus der erzeugten DFT,
- Ermittlung der Werte der Hauptkomponenten (PC1 ... PCM) durch Multiplizieren der Frequenzkomponenten mit den in der Datenbank gespeicherten Hauptkomponenten-Koeffizienten (Loading Matrix),
- Berechnen einer Differenz zwischen den ermittelten Werten der Hauptkomponenten und den in der Datenbank gespeicherten Werten der Hauptkomponenten (PC1 ... PCM) für jede Probe 1 - N,
- Auswählen der Kalibrierfunktion 1 - N, die derjenigen Probe 1- N zugeordnet ist, für die die Differenz zu den ermittelten Werten der Hauptkomponenten am geringsten ist,
- Ermitteln der Korngrößenverteilung mit der ausgewählten Kalibrierfunktion 1 - N aus der Summenverteilung der Effektivwerte in den vorgenannten Klassen.

15. Messeinrichtung zur Durchführung eines Verfahrens zum kontinuierlichen Bestimmen der Korngrößenverteilung von Granulaten bestehend aus Feststoffpartikeln mit unterschiedlichen Korngrößen nach einem der Ansprüche 1 bis 14, umfassend
- einen Anprallkörper (1) mit einem Halteteil (1b) und einem Kollisionsteil (1a), wobei der Anprallkörper (1) zur Erzeugung akustischer Signale durch Anprall von Feststoffpartikeln eines Granulats an einer Oberfläche des Kollisionsteils (1a) eingerichtet ist, die sich als Körperschallwellen in dem Anprallkörper (1) ausbreiten,
- eine Halterung (4), die zum Halten des Anprallkörpers (1) in einen Förderstrom der in einer Förderrichtung (13) transportierten Feststoffpartikel eingerichtet ist,
- eine zwischen der Halterung (4) und dem Anprallkörper (1) angeordnete Schwingungsisolierung (3),
- einen an dem Halteteil (1b) befestigten Schwingungsaufnehmer (2), der zum Erfassen der akustischen Signale und zum Umformen in elektrische Signale eingerichtet ist,
- mindestens einen Kraftaufnehmer (9), der zum Erfassen der Strömungsenergie des Förderstroms und umformen in elektrische Signale eingerichtet ist, wobei die Strömungsenergie durch die Geschwindigkeit und Konzentration bzw. Schüttdichte der Feststoffpartikel des Granulats bestimmt wird und
- eine Signalverarbeitungseinheit eingerichtet zur Signalverarbeitung der elektrischen Signale jedes Schwingungsaufnehmers (2) unter Berücksichtigung der elektrischen Signale jedes Kraftaufnehmers (9) zur Bestimmung der Korngrößenverteilung, wobei
- vor Beginn der Signalverarbeitung der elektrischen Signale zum Bestimmen der Korngrößenverteilung mindestens eine Normierfunktion erstellt wird, in dem ein Zusammenhang zwischen den elektrischen Signalen jedes Schwingungsaufnehmers (2) und den mit dem Kraftaufnehmer (9) erfassten Signalen der Strömungsenergie des Förderstroms bei unterschiedlichen, bekannten Strömungsenergien ermittelt wird,
- vor Beginn der Signalverarbeitung der elektrischen Signale zum Bestimmen der Korngrößenverteilung mindestens eine Kalibrierfunktion erstellt wird, in dem eine Korrelation zwischen den mit der Normierfunktion verarbeiteten elektrischen Signalen jedes Schwingungsaufnehmers (2) und der mit einer herkömmlichen Methode zur Bestimmung der Korngrößenverteilung bestimmten Korngrößenverteilung des Granulats ermittelt wird und
- die Signalverarbeitung der elektrischen Signale zum Bestimmen der Korngrößenverteilung folgende Schritte umfasst:
- Normieren der von dem Schwingungsaufnehmer (2) erfassten elektrischen Signale mit der Normierfunktion in Abhängigkeit von den erfassten elektrischen Signalen des Kraftaufnehmers (9), um die Abhängigkeit der erfassten elektrischen Signale des Schwingungsaufnehmers (2) von der Strömungsenergie zu eliminieren,
- Ermitteln der Korngrößenverteilung durch Anwenden der Kalibrierfunktion auf die normierten elektrischen Signale.

16. Messeinrichtung nach Anspruch 15, **dadurch gekennzeichnet, dass** zumindest die für den Anprall der Feststoffpartikel eingerichtete Oberfläche des Kollisionsteils (1) sphärisch ausgebildet ist, wobei das Kollisionsteil (1a) die Form eines Kugelsegmentes und das Halteteil (1b) die Form eines geraden Zylinders aufweist, wobei sich der Zylinder senkrecht von der Grundfläche des Kreissegments in Verlängerung von dessen Höhe erstreckt.

17. Messeinrichtung nach Anspruch 16, **dadurch gekennzeichnet, dass** die Halterung (4) einen rohrförmigen Abschnitt (4a) aufweist, der zur bündigen Aufnahme des Halteteils (1b) eingerichtet ist und die Halterung (4) einen zu dem rohrförmigen Abschnitt (4a) senkrecht verlaufenden Abschnitt (4b) aufweist.

18. Messeinrichtung nach Anspruch 15, **dadurch gekennzeichnet, dass** der Anprallkörper (1) als Stab ausgebildet ist und ein erster Teil des Stabes das Kollisionsteil (1a) und ein zweiter Teil des Stabes das Halteteil (1b) bildet, wobei eine Höhlung (4c) in der Halterung (4) zur bündigen Aufnahme des Halteteils (1b) eingerichtet ist.

19. Messeinrichtung nach einem der Ansprüche 15 bis 18, **dadurch gekennzeichnet, dass** eine Hülse (10) die Halterung (4) und teilweise das Kollisionsteil (1a) des Anprallkörpers (1) umgibt und die Hülse (10) von der Halterung (4) und dem Anprallkörper (1) schwingungsentkoppelt ist.

20. Messeinrichtung nach einem der Ansprüche 15 bis 19, **dadurch gekennzeichnet, dass** der Kraftaufnehmer (9) einen elastisch verformbaren Verformungskörper (9c) aufweist, auf dem mindestens ein Dehnungsmessstreifen (9a) derart angebracht ist, dass sich dessen elektrischer Widerstand bei einer Verformung des Verformungskörpers (9c) ändert.

21. Messeinrichtung einem der Ansprüche 15 bis 17, **dadurch gekennzeichnet, dass** an der Halterung (4) zum Halten des Anprallkörpers (1) mindestens ein Dehnungsmessstreifen (9a) derart angebracht ist, dass sich dessen elektrischer Widerstand bei einer Verformung der Halterung (4) ändert.

22. Messeinrichtung nach Anspruch 16, **dadurch gekennzeichnet, dass**
- die aus einem elastischen Material bestehende Schwingungsisolierung (3) einen kreisringförmigen und einen hohlzylindrischen Abschnitt (3a, 3b) aufweist, wobei der kreisringförmige Abschnitt (3a) flächendeckend auf der Grundfläche des Kollisionsteils (1a) und der hohlzylindrische Abschnitt (3b) an dem Außenmantel des Halteteils (1b) anliegt und
- der Kraftaufnehmer (9) zwischen der Grundfläche des Kreissegments und dem kreisringförmigen Abschnitt der Schwingungsisolierung (3) angeordnet ist.

23. Messeinrichtung nach einem der Ansprüche 17 bis 19, **dadurch gekennzeichnet, dass** der Kraftaufnehmer (9) an einem gegenüber der Halterung (4) frei beweglichen Teil des Anprallkörpers (1) befestigt ist.

24. Messeinrichtung nach einem der Ansprüche 15 bis 23, **dadurch gekennzeichnet, dass** die Halterung (4) zum Halten des Anprallkörpers (1) schwingungsentkoppelt an einem Teil eines Transportsystems (14, 15, 16) für das Granulat befestigt ist.

## Claims

1. Method for the continuous determination of the particle size distribution of granular material consisting of solid particles having different particle sizes comprising the steps:
- transporting the solid particles in a delivery direction (13) in a delivery flow, wherein solid particles collide with at least one impact body (1) adapted as a waveguide and generate acoustic signals which propagate in each impact body (1) as solid-borne sound waves,
- recording the acoustic signals and converting into electrical signals with the aid of at least one vibration sensor (2),
- recording the flow energy of the delivery flow and converting into electrical signals with the aid of at least one force sensor (9), wherein the flow energy is determined by the velocity and concentration or bulk density of the solid particles of the granular material,
- signal processing of the electrical signals of each vibration sensor (2) taking into account the electrical signals of each force sensor (9) to determine the particle size distribution, wherein
- before beginning the signal processing of the electrical signals to determine the particle size distribution, at least one normalizing function is created in which a relationship is determined between the electrical signals of each vibration sensor (2) and the signals of the flow energy of the delivery flow recorded by means of the force sensor (9) for different known flow energies,
- before beginning the signal processing of the electrical signals to determine the particle size distribution, at least one calibrating function is created in which a correlation is determined between the electrical signals of each vibration sensor (2) processed with the normalizing function and the particle size distribution of the granular material determined using a conventional method to determine the grain size distribution and
- the signal processing of the electrical signals to determine the particle size distribution comprises the following steps:
- normalizing the electrical signals recorded by the vibration sensor (2) with the normalizing function as a function of the recorded electrical signals of the force sensor (9) in order to eliminate the recorded electrical signals of the vibration sensor (2) from the flow energy,
- determining the particle size distribution by applying the calibrating function to the normalized electrical signals.

2. The method according to claim 1, **characterized in that** the acoustic signals are recorded by means of at least one acceleration sensor with a neutral axis (2a) and each acceleration sensor is arranged in such a manner that the delivery direction (13) of the granular material at the instant of impact coincides with the neutral axis (2a).

3. The method according to claim 1 or 2, **characterized in that** each impact body (1) is held in a vibration-isolated manner with a holder (4) in the delivery flow.

4. The method according to one of claims 1 to 3, **characterized in that** solid particles transported in the delivery flow collide with a deformation body (9c) of at least one force sensor (9) and elastically deform the deformation body (9c) with the result that the electrical resistance of at least one strain gauge strip (9a) of the force sensor (9) mounted on the deformation body (9c) changes.

5. The method according to one of claims 1 to 3, **characterized in that** the solid particles colliding with the impact body (1) elastically deform the impact body (1) with the result that the electrical resistance of at least one strain gauge strip (9a) of the force sensor (9) mounted on the impact body changes.

6. The method according to one of claims 1 to 3, **characterized in that** the solid particles colliding with a holder (4) for the impact body (1) elastically deform the holder (4) with the result that the electrical resistance of at least one strain gauge strip (9a) of the force sensor (9) mounted on the holder (4) changes.

7. The method according to one of claims 1 to 3, **characterized in that** the flow energy is recorded with the aid of at least one force sensor (9) arranged on the impact body (1).

8. The method according to one of claims 1 to 7, **characterized in that** the acoustic signals and the flow energy are recorded simultaneously.

9. The method according to claim 8, **characterized in that** the acoustic signals and the flow energy are recorded in relation to a substantially identical group of solid particles in such a manner that falsifications of the result of the signal processing due to a too-great distance between the force sensor and the vibration sensor are avoided.

10. The method according to one of claims 1 to 9, **characterized in that** the acoustic signals and the flow energy are recorded continuously.

11. The method according to one of claims 1 to 10, **characterized in that** before beginning the signal processing of the electrical signals to determine the particle size distribution, a calibrating function is created in which the following steps are carried out:
- converting the electrical signals recorded by the vibration sensor (2) by means of an analog/digital converter into digital raw signals,
- normalizing the raw signals with the normalizing function as a function of the recorded electrical signals of the force sensor (9),
- filtering the normalized raw signals using a bandpass filter,
- forming sliding effective values of the signal intensity from the filtered normalized raw signals,
- logarithmizing the effective values,
- classifying the logarithmized effective values into several classes having different signal intensity,
- determining a correlation between the sum distribution of the effective values in the aforesaid classes and the particle size distribution of the granular material determined using a conventional method for determining the particle size distribution.

12. The method according to claim 11, **characterized in that** the signal processing of the electrical signals to determine the particle size distribution comprises the following steps:
- converting the electrical signals recorded by the vibration sensor by means of an analog/digital converter into digital raw signals,
- normalizing the raw signals with the normalizing function as a function of the recorded electrical signals of the force sensor (9),
- filtering the normalized raw signals using a bandpass filter,
- forming sliding effective values of the signal intensity from the filtered normalized raw signals,
- logarithmizing the effective values,
- classifying the logarithmized effective values into several classes having different signal intensity,
- determining the particle size distribution with the aid of the calibrating function from the sum distribution of the effective values in the aforesaid classes.

13. The method according to one of claims 1 to 10, **characterized in that** before beginning the signal processing of the electrical signals to determine the particle size distribution, several calibrating functions are created in which for N samples of the delivery flow with different particle size distributions respectively one calibrating function is created in which for each 1 - N sample the following steps are carried out:
- converting the electrical signals recorded by the vibration sensor using an analog/digital converter into digital raw signals,
- normalizing the raw signals using the normalizing function as a function of the recorded electrical signals of the force sensor,
- filtering the normalized raw signals using a bandpass filter,
- forming sliding effective values of the signal intensity from the raw signals,
- logarithmizing the effective values,
- classifying the logarithmized effective values into several classes having different signal intensity,
- determining a correlation between the sum distribution of the effective values in the aforesaid classes and the particle size distribution of the granular material of the respective sample determined using a conventional method for determining the particle size distribution,
- storing the determined correlation for each 1 - N sample as a 1 - N calibrating function in a database,
- creating an assignment function in which the following steps are carried out for each 1 - N sample:
- subjecting the normalized raw signals of each 1 - N sample to a discrete Fourier transformation (DFT),
- forming an average and determining frequency components from the DFTs generated for each 1 - N sample,
- forming a DFT matrix from the frequency components of the 1 - N samples,
- subjecting the DFT matrix to a principal component analysis to determine the values of the principal components (PC1...PCM) for each 1 - N sample and of principal component coefficients (loading matrix),
- storing the principal component coefficients (loading matrix) and the values of the principal components (PC1...PCM) for each 1 - N sample in a database,
- assigning the values of the principal components (PC1...PCM) to the 1 - N calibrating function determined for the respective sample.

14. The method according to claim 13, **characterized in that** the signal processing of the electrical signals to determine the grain size distribution comprises the following steps:
- converting the electrical signals recorded by the vibration sensor (2) using an analog/digital converter into digital raw signals,
- normalizing the raw signals with the normalizing function as a function of the recorded electrical signals of the force sensor (9),
- filtering the normalized raw signals using a bandpass filter,
- forming sliding effective values of the signal intensity from the filtered normalized raw signals,
- logarithmizing the effective values,
- dividing the logarithmized effective values into several classes having different signal intensity,
- additionally subjecting the normalized raw signals to a discrete Fourier transformation (DFT),
- forming an average and determining frequency components from the generated DFT,
- determining the values of the principal components (PC1...PCM) by multiplying the frequency components by the principal component coefficients (loading matrix) stored in the database,
- calculating a difference between the determined values of the principal components and the values of the principal components (PC1...PCM) stored in the database for each 1 - N sample,
- selecting the calibrating function 1 - N which is assigned to that 1 - N sample for which the difference from the determined values of the principal components is the smallest,
- determining the grain size distribution with the selected calibrating function 1 - N from the sum distribution of the effective values in the aforesaid classes.

15. Measuring device for carrying out a method for the continuous determination of the particle size distribution of granular material consisting of solid particles with different particle sizes according to one of claims 1 to 14, comprising
- an impact body (1) comprising a holding part (1b) and a collision part (1a), wherein the impact body (1) is adapted to produce acoustic signals by impact of solid particles of a granular material against a surface of the collision part (1a), which signals propagate as solid-borne sound waves in the impact body (1),
- a holder (4) adapted to hold the impact body (1) in a delivery flow of the solid particles transported in a delivery direction (13),
- a vibration insulation (3) arranged between the holder (4) and the impact body (1),
- a vibration sensor (2) fastened to the holding part (1b) which is adapted to record the acoustic signals and to convert into electrical signals,
- at least one force sensor (9) adapted to record the flow energy of the delivery flow and convert into electrical signals, wherein the flow energy is determined by the velocity and concentration or bulk density of the solid particles of the granular material and
- a signal processing unit adapted for signal processing of the electrical signals of each vibration sensor (2) taking into account the electrical signals of each force sensor (9) to determine the grain size distribution, wherein
- before beginning the signal processing of the electrical signals to determine the grain size distribution at least one normalizing function is created in which a relationship is determined between the electrical signals of each vibration sensor (2) and the signals of the flow energy of the delivery flow recorded with the force sensor (9) for different known flow energies,
- before beginning the signal processing of the electrical signals to determine the particle size distribution at least one calibrating function is created in which a correlation is determined between the electrical signals of each vibration sensor (2) processed with the normalizing function and the particle size distribution of the granular material determined using a conventional method for determining the particle size distribution and
- the signal processing of the electrical signals to determine the particle size distribution comprises the following steps:
- normalizing the electrical signals recorded by the vibration sensor (2) using the normalizing function as a function of the recorded electrical signals of the force sensor (9) in order to eliminate the dependence of the recorded electrical signals of the vibration sensor (2) on the flow energy,
- determining the particle size distribution by applying the calibrating function to the normalized electrical signals.

16. The measuring device according to claim 15, **characterized in that** at least the surface of the collision part (1) adapted for the impact of the solid particles is configured to be spherical, wherein the collision part (1a) has the form of a spherical segment and the holding part (1b) has the form of a straight cylinder, wherein the cylinder extends perpendicularly from the base surface of the circular segment in extension of its height.

17. The measuring device according to claim 16, **characterized in that** the holder (4) has a tubular section (4a) which is adapted for flush receipt of the holding part (1b) and the holder (4) has a section (4b) running perpendicularly to the tubular section (4a) .

18. The measuring device according to claim 15, **characterized in that** the impact body (1) is configured as a rod and a first part of the rod forms the collision part (1a) and a second part of the rod forms the holding part (1b), wherein a cavity (4c) in the holder (4) is adapted for flush receipt of the holding part (1b).

19. The measuring device according to one of claims 15 to 18, **characterized in that** a sleeve (10) surrounds the holder (4) and partially the collision part (1a) of the impact body (1) and the sleeve (10) is vibration-decoupled from the holder (4) and the impact body (1).

20. The measuring device according to one of claims 15 to 19, **characterized in that** the force sensor (9) comprises an elastically deformable body (9c) on which at least one strain gauge strip (9a) is mounted in such a manner that its electrical resistance changes in the event of a deformation of the deformation body (9c) .

21. The measuring device according to one of claims 15 to 17, **characterized in that** at least one strain gauge strip (9a) is attached to the holder (4) for holding the impact body (1) in such a manner that its electrical resistance changes in the event of a deformation of the holder (4).

22. The measuring device according to claim 16, **characterized in that**
- the vibration insulation (3) consisting of an elastic material comprises an annular and a hollow cylindrical section (3a, 3b), wherein the annular section (3a) rests on the base surface of the collision part (1a) in a surface-covering manner and the hollow cylindrical section (3b) rests against the outer casing of the holding part (1b) and
- the force sensor (9) is arranged between the base surface of the circular segment and the annular section of the vibration insulation (3).

23. The measuring device according to one of claims 17 to 19, **characterized in that** the force sensor (9) is fastened to a part of the impact body (1) which is freely movable with respect to the holder (4).

24. The measuring device according to one of claims 15 to 23, **characterized in that** the holder (4) for holding the impact body (1) is fastened to a part of a transport system (14, 15, 16) for the granular material in a vibration-decoupled manner.

## Revendications

1. Procédé, destiné à déterminer en continu la distribution granulométrique de granulés composés de particules solides présentant différentes granulométries, comprenant les étapes, consistant à
- transporter les particules solides dans une direction de convoyage (13) dans un flux de convoyage, des particules solides entrant en collision avec au moins un corps récepteur de chocs (1) aménagé sous la forme d'un guide d'ondes et générant des signaux acoustiques qui se propagent dans chaque corps récepteur de chocs (1) sous la forme d'ondes sonores de structure,
- détecter les signaux acoustiques et les convertir en signaux électriques à l'aide d'au moins un capteur d'oscillations (2),
- détecter l'énergie cinétique du flux de convoyage et la convertir en signaux électriques à l'aide d'au moins un capteur de force (9), l'énergie cinétique étant déterminée par la vitesse et la concentration ou la densité apparente des particules solides des granulés,
- traiter les signaux électriques de chaque capteur d'oscillations (2) sous considération des signaux électriques de chaque capteur de force (9), pour déterminer la distribution granulométrique,
- avant le début du traitement des signaux électriques, pour déterminer la distribution granulométrique, au moins une fonction de normalisation étant établie en ce qu'une relation entre les signaux électriques de chaque capteur d'oscillations (2) et les signaux de l'énergie cinétique du flux de convoyage détectés avec le capteur de force (9) est recherchée avec différentes énergies cinétiques connues,
- avant le début du traitement des signaux électriques, pour déterminer la distribution granulométrique, au moins une fonction de calibrage étant établie, en ce qu'une corrélation entre les signaux électriques de chaque capteur d'oscillations (2) traités avec la fonction de normalisation et la distribution granulométrique des granulés déterminée à l'aide d'une méthode conventionnelle de détermination de la distribution granulométrique est recherchée, et
- le traitement des signaux électriques destiné à déterminer la distribution granulométrique comprenant les étapes suivantes:
- normaliser les signaux électriques détectés par le capteur d'oscillations (2) à l'aide de la fonction de normalisation, en fonction des signaux électriques détectés par le capteur de force (9), pour éliminer la dépendance entre les signaux électriques détectés par le capteur d'oscillations (2) et l'énergie cinétique,
- rechercher la distribution granulométrique par application de la fonction de calibrage sur les signaux électriques normalisés.

2. Procédé selon la revendication 1, **caractérisé en ce que** les signaux acoustiques sont détectés à l'aide d'au moins un capteur d'accélération avec un axe neutre (2a) et chaque capteur d'accélération est placé de telle sorte que la direction de convoyage (13) des granulés à l'instant de la collision coïncide avec l'axe neutre (2a).

3. Procédé selon la revendication 1 ou 2, **caractérisé en ce que** chaque corps récepteur de chocs (1) est maintenu de manière isolée des oscillations dans le flux de convoyage, à l'aide d'un support (4).

4. Procédé selon l'une quelconque des revendications 1 à 3, **caractérisé en ce que** des particules solides transportées dans le flux de convoyage entrent en collision avec un corps de déformation (9c) d'au moins un capteur de force (9) et déforment élastiquement le corps de déformation (9c), suite à quoi la résistance électrique d'au moins une jauge extensométrique (9a) du capteur de force (9) montée sur le corps de déformation (9c) change.

5. Procédé selon l'une quelconque des revendications 1 à 3, **caractérisé en ce que** les particules solides qui entrent en collision avec le corps récepteur de chocs (1) déforment élastiquement le corps récepteur de chocs (1), suite à quoi la résistance électrique d'au moins une jauge extensométrique (9a) du capteur de force (9) montée sur le corps récepteur de chocs change.

6. Procédé selon l'une quelconque des revendications 1 à 3, **caractérisé en ce que** les particules solides qui entrent en collision avec un support (4) pour le corps récepteur de chocs (1) déforment élastiquement le support (4), suite à quoi la résistance électrique d'au moins une jauge extensométrique (9a) du capteur de force (9) montée sur le support (4) change.

7. Procédé selon l'une quelconque des revendications 1 à 3, **caractérisé en ce que** la détection de l'énergie cinétique s'effectue à l'aide d'au moins un capteur de force (9) placé sur le corps récepteur de chocs (1).

8. Procédé selon l'une quelconque des revendications 1 à 7, **caractérisé en ce que** la détection des signaux acoustiques et de l'énergie cinétique s'effectue simultanément.

9. Procédé selon la revendication 8, **caractérisé en ce que** la détection des signaux acoustiques et de l'énergie cinétique concernant un collectif sensiblement concordant des particules solides s'effectue de sorte à éviter des corruptions des résultats du traitement des signaux par un écart trop important entre le capteur de force et le capteur d'oscillations.

10. Procédé selon l'une quelconque des revendications 1 à 9, **caractérisé en ce que** la détection des signaux acoustiques et de l'énergie cinétique s'effectue en en continu.

11. Procédé selon l'une quelconque des revendications 1 à 10, **caractérisé en ce qu'**avant le début du traitement des signaux électriques, pour déterminer la distribution granulométrique, une fonction de calibrage est établie, **en ce que** sont réalisées les étapes suivantes:
- convertir les signaux électriques détectés par le capteur d'oscillations (2) en signaux bruts numériques, à l'aide d'un convertisseur analogique/numérique,
- normaliser les signaux bruts à l'aide de la fonction de normalisation, en fonction des signaux électriques détectés par le capteur de force (9),
- filtrer les signaux bruts normalisés à l'aide d'un filtre passe-bande,
- créer des valeurs effectives pondérées de l'intensité des signaux à partir des signaux bruts normalisés filtrés,
- calculer un logarithme des valeurs effectives,
- classer les valeurs effectives logarithmiques en plusieurs classes à différente intensité des signaux,
- rechercher une corrélation entre la distribution cumulative des valeurs effectives dans les classes précédemment citées et la distribution granulométrique des granulés, déterminée à l'aide d'une méthode conventionnelle de détermination de la distribution granulométrique.

12. Procédé selon la revendication 11, **caractérisé en ce que** le traitement des signaux électriques pour déterminer la distribution granulométrique comprend les étapes suivantes:
- convertir les signaux électriques détectés par le capteur d'oscillations en signaux bruts numériques, à l'aide d'un convertisseur analogique/numérique,
- normaliser les signaux bruts à l'aide de la fonction de normalisation, en fonction des signaux électriques détectés par le capteur de force (9),
- filtrer les signaux bruts normalisés à l'aide d'un filtre passe-bande,
- créer des valeurs effectives pondérées de l'intensité des signaux à partir des signaux bruts normalisés filtrés,
- calculer un logarithme des valeurs effectives,
- classer les valeurs effectives logarithmiques en plusieurs classes à différente intensité des signaux,
- rechercher la distribution granulométrique à l'aide de la fonction de calibrage à partir de la distribution cumulative des valeurs effectives dans les classes précédemment citées.

13. Procédé selon l'une quelconque des revendications 1 à 10, **caractérisé en ce qu'**avant le début du traitement des signaux électriques, pour déterminer la distribution granulométrique, plusieurs fonctions de calibrage sont établies, **en ce que** pour N échantillons du flux de convoyage avec différentes distributions granulométriques, il est établi chaque fois une fonction de calibrage **en ce que** pour chaque échantillon 1 - N sont réalisées les étapes suivantes:
- convertir les signaux électriques détectés par le capteur d'oscillations en signaux bruts numériques, à l'aide d'un convertisseur analogique/numérique,
- normaliser les signaux bruts à l'aide de la fonction de normalisation, en fonction des signaux électriques détectés par le capteur de force,
- filtrer les signaux bruts normalisés à l'aide d'un filtre passe-bande,
- créer des valeurs effectives pondérées de l'intensité des signaux à partir des signaux bruts normalisés filtrés,
- calculer un logarithme des valeurs effectives,
- classer les valeurs effectives logarithmiques en plusieurs classes à différente intensité des signaux,
- rechercher une corrélation entre la distribution cumulative des valeurs effectives dans les classes précédemment citées et la distribution granulométrique des granulés de l'échantillon concerné, déterminée à l'aide d'une méthode conventionnelle de détermination de la distribution granulométrique,
- mémoriser la corrélation recherchée pour chaque échantillon 1 - N en tant que fonction de calibrage 1 - N dans une base de données,
- établir une fonction d'affectation, **en ce que** pour chaque échantillon 1 - N sont réalisées les étapes suivantes:
- soumettre les signaux bruts normalisés de chaque échantillon 1 - N à une transformation de Fourier discrète (TFD),
- calculer une valeur moyenne et déterminer des composantes de fréquence à partir de la TFD créée pour chaque échantillon 1 - N,
- créer une matrice de TFD à partir des composantes de fréquence des échantillons 1 - N,
- soumettre la matrice de TFD à une analyse en composantes principales, pour rechercher les valeurs des composantes principales (CP1 ... CPM) pour chaque échantillon 1 - N et des coefficients de composantes principales (Loading Matrix),
- mémoriser les coefficients de composantes principales (Loading Matrix) et les valeurs des composantes principales (CP1 ... CPM) pour chaque échantillon 1 - N dans une base de données,
- affecter les valeurs des composantes principales (CP1 ... CPM) à la fonction de calibrage 1- N déterminée pour l'échantillon concerné.

14. Procédé selon la revendication 13, **caractérisé en ce que** le traitement des signaux électriques pour déterminer la distribution granulométrique comprend les étapes suivantes:
- convertir les signaux électriques détectés par le capteur d'oscillations (2) en signaux bruts numériques, à l'aide d'un convertisseur analogique/numérique,
- normaliser les signaux bruts à l'aide de la fonction de normalisation, en fonction des signaux électriques détectés par le capteur de force (9),
- filtrer les signaux bruts normalisés à l'aide d'un filtre passe-bande,
- créer des valeurs effectives pondérées de l'intensité des signaux à partir des signaux bruts normalisés filtrés,
- calculer un logarithme des valeurs effectives,
- répartir les valeurs effectives logarithmiques en plusieurs classes à différente intensité des signaux,
- soumettre en supplément les signaux bruts normalisés à une transformation de Fourier discrète (TFD),
- calculer une valeur moyenne et déterminer des composantes de fréquence à partir de la TFD créée,
- rechercher les valeurs des composantes principales (CP1 ... CPM) par multiplication des composantes de fréquence par les coefficients de composantes principales (Loading Matrix) mémorisés dans la base de données,
- calculer une différence entre les valeurs de composantes principales recherchées et les valeurs des composantes principales (CP1 ... CPM) mémorisées dans la base de données pour chaque échantillon 1 - N,
- sélectionner la fonction de calibrage 1 - N, qui est affectée à l'échantillon 1 - N pour lequel la différence par rapport aux valeurs des composantes principales recherchées est la plus faible,
- rechercher la distribution granulométrique à l'aide de la fonction de calibrage 1 - N sélectionnée, dans la distribution cumulative des valeurs effectives dans les classes précédemment citées.

15. Dispositif de mesure, destiné à réaliser un procédé de détermination continue de la distribution granulométrique de granulés composés de particules solides présentant différentes granulométries selon l'une quelconque des revendications 1 à 14, comprenant
- un corps récepteur de chocs (1), pourvu d'un élément de maintien (1b) et d'un élément de collision (la), le corps récepteur de chocs (1) étant aménagé pour générer des signaux acoustiques par collision de particules solides de granulés sur une surface de l'élément de collision (la), qui se propagent sous la forme d'ondes sonores de structure dans le corps récepteur de chocs (1),
- un support (4), qui est aménagé pour maintenir le corps récepteur de chocs (1) dans un flux de convoyage des particules solides transportées dans une direction de convoyage (13),
- une isolation anti-oscillatoire (3) placée entre le support (4) et le corps récepteur de chocs (1),
- un capteur d'oscillations (2) fixé sur l'élément de maintien (1b), qui est aménagé pour détecter les signaux acoustiques et pour les convertir en signaux électriques,
- au moins un capteur de force (9), qui est aménagé pour détecter l'énergie cinétique du flux de convoyage et pour la convertir en signaux électriques, l'énergie cinétique étant déterminée par la vitesse et la concentration ou la densité apparente des particules solides des granulés et
- une unité de traitement des signaux, aménagée pour traiter les signaux électriques de chaque capteur d'oscillations (2), sous considération des signaux électriques de chaque capteur de force (9), pour déterminer la distribution granulométrique,
- avant le début du traitement des signaux électriques, pour déterminer la distribution granulométrique, au moins une fonction de normalisation étant établie en ce qu'une relation entre les signaux électriques de chaque capteur d'oscillations (2) et les signaux de l'énergie cinétique du flux de convoyage détectés avec le capteur de force (9) est recherchée avec différentes énergies cinétiques connues,
- avant le début du traitement des signaux électriques, pour déterminer la distribution granulométrique, au moins une fonction de calibrage étant établie, en ce qu'une corrélation entre les signaux électriques de chaque capteur d'oscillations (2) traités avec la fonction de normalisation et la distribution granulométrique des granulés déterminée à l'aide d'une méthode conventionnelle de détermination de la distribution granulométrique est recherchée,
- le traitement des signaux électriques destiné à déterminer la distribution granulométrique comprenant les étapes suivantes:
- normaliser les signaux électriques détectés par le capteur d'oscillations (2) à l'aide de la fonction de normalisation, en fonction des signaux électriques détectés par le capteur de force (9), pour éliminer la dépendance entre les signaux électriques détectés par le capteur d'oscillations (2) et l'énergie cinétique,
- rechercher la distribution granulométrique par application de la fonction de calibrage sur les signaux électriques normalisés.

16. Dispositif de mesure selon la revendication 15, **caractérisé en ce qu'**au moins la surface de l'élément de collision (1) aménagée pour la collision des particules solides est conçue sous forme sphérique, l'élément de collision (1a) présentant la forme d'un segment sphérique et l'élément de maintien (1b) présentant la forme d'un cylindre droit, le cylindre s'étendant à la perpendiculaire de la surface de base du segment sphérique, dans le prolongement de la hauteur de celui-ci.

17. Dispositif de mesure selon la revendication 16, **caractérisé en ce que** le support (4) comporte un tronçon tubulaire (4a) qui est aménagé pour le logement affleurant de l'élément de maintien (1b) et le support (4) comporte un tronçon (4b) s'étendant à la perpendiculaire du tronçon tubulaire (4a).

18. Dispositif de mesure selon la revendication 15, **caractérisé en ce que** le corps récepteur de chocs (1) est conçu sous la forme d'une barre et une première partie de la barre forme l'élément de collision (1a) et une deuxième partie de la barre forme l'élément de maintien (1b), une cavité (4c) dans le support (4) étant aménagée pour le logement affleurant de l'élément de maintien (1b).

19. Dispositif de mesure selon l'une quelconque des revendications 15 à 18, **caractérisé en ce qu'**une douille (10) entoure le support (4) et en partie l'élément de collision (1a) du corps récepteur de chocs (1) et la douille (10) est découplée en oscillations par rapport au support (4) et au corps récepteur de chocs (1).

20. Dispositif de mesure selon l'une quelconque des revendications 15 à 19, **caractérisé en ce que** le capteur de force (9) comporte un corps de déformation (9c) élastiquement déformable, sur lequel au moins une jauge extensométrique (9a) est montée de sorte que sa résistance électrique change los d'une déformation du corps de déformation (9c).

21. Dispositif de mesure selon l'une quelconque des revendications 15 à 17, **caractérisé en ce que** sur le support (4) destiné à maintenir le corps récepteur de chocs (1), au moins une jauge extensométrique (9a) est montée de sorte que sa résistance électrique change lors d'une déformation du support (4).

22. Dispositif de mesure selon la revendication 16, **caractérisé en ce que**
- l'isolation anti-oscillatoire (3) composée d'une matière élastique comporte un tronçon en forme d'anneau circulaire et un tronçon en forme de cylindre creux (3a, 3b), le tronçon en forme d'anneau circulaire (3a) étant adjacent de sorte à la recouvrir entièrement à la surface de base de l'élément de collision (1a) et le tronçon en forme de cylindre creux (3b) étant adjacent à l'enveloppe extérieure de l'élément de maintien (1b) et
- le capteur de force (9) est placé entre la surface de base de l'arc de cercle et le tronçon en forme d'anneau circulaire de l'isolation anti-oscillatoire (3).

23. Dispositif de mesure selon l'une quelconque des revendications 17 à 19, **caractérisé en ce que** le capteur de force (9) est fixé sur une partie du corps récepteur de chocs (1) librement mobile par rapport au support (4).

24. Dispositif de mesure selon l'une quelconque des revendications 15 à 23, **caractérisé en ce que** le support (4) destiné à maintenir le corps récepteur de chocs (1) est fixé de manière découplée en oscillations sur une partie d'un système de transport (14, 15, 16) des granulés.
